# EUROPEAN PATENT APPLICATION

(11) **EP 4 660 504 A1**
(43) Date of publication of application: **10.12.2025**
(21) Application number: 24797234.2
(22) Date of filing: 03.01.2024
(51) Int. Cl.: F16L 19/06, F16L 19/065, F16L 19/08, F16L 21/02, F16B 43/00, F24F 1/26, F16L 17/02

(54) **PIPE CONNECTION DEVICE AND AIR CONDITIONER COMPRISING SAME**

(30) Priority: 25.04.2023 KR 20230054242; 25.04.2023 KR 20230054243; 25.04.2023 KR 20230054249; 25.04.2023 KR 20230054252; 25.04.2023 KR 20230054254; 25.04.2023 KR 20230054255
(71) Applicant: LG Electronics Inc., Yeongdeungpo-gu Seoul 07336 (KR); PNC Industry Co., Ltd., Seoul 06165 (KR)
(72) Inventor: CHOI, Sunggyu, Seoul 08592 (KR); HWANG, Sungjin, Seoul 08592 (KR); KIM, Young cheoul, Gimhae-si Gyeongsangnam-do 50830 (KR)
(74) Representative: Ter Meer Steinmeister & Partner
(86) International application number: PCT/KR2024/000114
(87) International publication number: WO 2024/225571

(57) **Abstract**

The pipe connection device according to an embodiment of the present invention for achieving the above purpose comprises: a housing including: a front female thread portion formed on an inner surface of one end thereof; and a rear female thread portion formed on an inner surface of the other end thereof, and having a receiving space formed therein for receiving components; a housing nut inserted into the one end of the housing, having a pipe hole formed therein through which a refrigerant pipe passes in a forward direction; a first stopper positioned behind the housing nut in the receiving space to restrict reverse movement of the refrigerant pipe; an outer washer positioned behind the first stopper; one or more pipe O-rings positioned behind the outer washer; an inner washer positioned behind the one or more pipe O-rings; a second stopper positioned behind the inner washer to restrict the reverse movement of the refrigerant pipe; and a main packing positioned behind the second stopper to support the second stopper.

## Description

### Technical Field

This invention is about a pipe connection device for connecting refrigerant pipes to the outdoor unit or indoor unit of an air conditioner, and an air conditioner comprising the same.

### Background Art

An air conditioner includes an indoor unit installed indoors to generate cool air or warm air, and an outdoor unit installed outdoors to allow outdoor air and refrigerant to exchange heat. The outdoor unit houses a compressor and a heat exchanger (condenser), while the indoor unit houses a heat exchanger (evaporator) and an expansion valve. The indoor and outdoor units are connected by refrigerant pipes, and service valves are installed on the side of the outdoor unit or the side of the indoor unit to connect the refrigerant pipes.

A refrigerant pipe connection device is required to reliably prevent refrigerant leakage and facilitate connection work when connecting refrigerant pipes to the outdoor unit or indoor unit, or when extending existing refrigerant pipes.

The prior art discloses a pipe connection device for connecting refrigerant pipes to a service valve provided on the side of the outdoor unit.

However, the prior art has the following issues.

First, when the pipe is inserted into the nut and the first and second holders are released from the nut, the user may apply force to the pipe, causing it to be pushed further in the forward direction. In this case, since the grip ring and the inwardly bent portion are strongly engaged with the outer surface of the pipe, the pipe cannot be moved in the reverse direction.

In this state, if the tip of the pipe is seated on the second stopper of the service valve, the nut may become separated from the service valve pipe by a distance greater than the set distance, resulting in the inability to screw the nut onto the outer surface of the pipe.

Second, in the prior art, the pipe end is directly seated on the second stopper of the service valve pipe. Here, when the aluminum pipe and the brass service valve pipe come into direct contact, there is a disadvantage in that galvanic corrosion may occur due to the difference in material properties.

Third, in the prior art, to prevent the nut from loosening due to external force while it is screwed onto the first holder, it is necessary for the second holder to have a latch protruding from its upper surface, and for the latch to be inserted into the nut's latch groove.

If the latch and latch groove structure is absent, the nut may come loose from the first holder, causing the components housed inside the first holder to fall out. In other words, if the first and second holder assembly is separated from the nut before connecting the pipe connection device to the service valve, the internal components may fall out.

Prior Art 1: Korean Registered Patent No. 10-1110400 (January 19, 2012)

Prior Art 2: Korean Published Patent No. 10-2012-0095772 (August 29, 2012)

### Disclosure

### Technical Problem

The present invention is proposed to improve the above-mentioned problems.

### Technical Solution

The pipe connection device according to an embodiment of the present invention for achieving the above purpose comprises: a housing including: a front female thread portion formed on an inner surface of one end thereof; and a rear female thread portion formed on an inner surface of the other end thereof, and having a receiving space formed therein for receiving components; a housing nut inserted into the one end of the housing, having a pipe hole formed therein through which a refrigerant pipe passes in a forward direction; a first stopper positioned behind the housing nut in the receiving space to restrict reverse movement of the refrigerant pipe; an outer washer positioned behind the first stopper; one or more pipe O-rings positioned behind the outer washer; an inner washer positioned behind the one or more pipe O-rings; a second stopper positioned behind the inner washer to restrict the reverse movement of the refrigerant pipe; and a main packing positioned behind the second stopper to support the second stopper.

The housing nut includes: a nut body in which the pipe hole is formed; and a male thread portion formed on an outer surface of the nut body to be coupled to the front female thread portion.

An air of jig grooves extends radially from an edge of the pipe hole, the pair of jig grooves are formed in positions facing each other, and the pair of jig grooves extend rearwardly from a front of the nut body to a predetermined depth.

The housing nut is formed of brass material.

A packing sleeve on which the main packing seated protrudes from an inner surface of the housing. The packing sleeve is formed at a point spaced apart from a front end of the rear female thread portion towards the front female thread portion, and extends in a circumferential direction of the housing.

The receiving space is a space formed between a rear end of the front female thread portion and the packing sleeve.

The pipe connection device of the present invention further comprises a socket O-ring interposed between the packing sleeve and the rear female thread portion, and an O-ring groove in which the socket O-ring is seated is recessed in the inner surface of the housing.

The first stopper is a tapered ring having: a pipe hole through which the refrigerant pipe passes; a front end contacting the housing nut; a rear end contacting the outer washer, and a diameter decreasing from the front end to the rear end.

The pipe connection device of the present invention further comprises a remover coupled to a rear end of the housing. The remover comprises: a cap threadedly coupled to the rear female thread portion; and an indicator inserted into the cap.

The cap includes: a cap body; and a guide sleeve extending from a front of the cap body and having a male thread portion on an outer surface thereof. The cap includes inside thereof: a guide hole extending a predetermined length from a front end of the guide sleeve; a hook extraction hole extending a predetermined length from a rear end of the cap body and having a diameter smaller than that of the guide hole; and a hook engagement step connecting the guide hole and the hook extraction hole.

The indicator includes: a body portion inserted into an inside of the guide sleeve; a contact leg extending from a front end of the body portion; a sliding leg extending from a rear of the body portion, and an engagement step on which an end of the refrigerant pipe is hooked protrudes from an outer surface of an end of the contact leg.

The sliding leg includes a pair of legs having engagement hooks. The engagement hooks respectively protrude from outer surfaces of the pair of legs, and contact the hook engagement step.

The indicator further comprises a balancing leg extending from the front of the body portion, and the balancing leg is shorter than the contact leg.

### Advantageous Effects

The pipe connection device according to the embodiment of the present invention provides the following effects.

First, since there is no need to change the internal structure of the socket constituting the service valve, it has the advantage of being usable with existing service valves.

Second, since the socket of the service valve does not come into direct contact with the end of the refrigerant pipe, galvanic corrosion caused by contact between dissimilar metals does not occur.

Third, even if the remover is removed after the refrigerant pipe is inserted into the housing to a set depth, the pipe does not insert further or move due to external force. Therefore, the issue of the pipe connection apparatus failing to connect to the socket of the service valve does not occur.

Fourth, even if the remover attached to the housing is separated before connecting the pipe connection device to the service valve socket, the components inserted into the housing do not fall out of the housing, eliminating the risk of component loss.

Fifth, since multiple components for securing the pipe are provided inside the pipe connection device, there is the advantage that the pipe can be stably maintained without being removed in a state where the pipe is installed.

Sixth, since multiple components for sealing the pipe are provided inside the pipe connection device, there is the advantage that the airtightness between the indoor unit or outdoor unit and the pipe connected thereto can be stably secured.

Seventh, multiple components are stacked inside the housing of the pipe connection device, and a housing nut is provided to prevent the components from detaching from the housing. Therefore, the housing prevents the components inside from spilling out.

Eighth, an indicator unit that limits the insertion depth of the pipe is provided inside the housing, ensuring that the pipe is inserted accurately.

Ninth, a washer is provided around the O-ring that contacts the pipe to limit the elastic deformation of the O-ring, thereby preventing damage to the pipe caused by the sealing material even when the pipe is connected to the pipe connection device for an extended period.

### Description of Drawings

Figure 1 is a view showing a state where a refrigerant pipe is connected to a service valve of an outdoor unit by a pipe connection device according to an embodiment of the present invention.
Figure 2 is a bottom perspective view of the pipe connection device according to a first embodiment of the present invention.
Figure 3 is a front perspective view of the pipe connection device.
Figure 4 is a cross-sectional view of the pipe connection device taken along line 4-4 in Figure 3.
Figure 5 is an exploded perspective view of the pipe connection device.
Figure 6 is a perspective view of a housing nut constituting the pipe connection device.
Figure 7 is a perspective view of a tapered ring constituting the pipe connection device.
Figure 8 is a front perspective view of a grip ring constituting the pipe connection device.
Figure 9 is a rear perspective view of the grip ring.
Figure 10 is a perspective view of a main packing constituting the pipe connection device.
Figure 11 is a cross-sectional view of the main packing.
Figure 12 is a cross-sectional view of the housing constituting the pipe connection device.
Figure 13 is a perspective view of an indicator constituting a remover.
Figure 14 is a rear perspective view of a cap constituting the remover.
Figure 15 is a cross-sectional view of the cap.
Figures 16 to 18 are cross-sectional views sequentially illustrating a process of coupling a refrigerant pipe to the pipe connection device.
Figures 19 and 20 are cross-sectional views showing the refrigerant pipe connected to the socket of the service valve via the pipe connection device.
Figure 21 is a cross-sectional view of a pipe connection device according to a second embodiment of the present invention.
Figure 22 is a front perspective view of a housing nut according to the second embodiment.
Figure 23 is a rear perspective view of the housing nut.
Figure 24 is a cross-sectional view of the housing nut.
Figure 25 is a perspective view of an external insulation washer.
Figure 26 is a perspective view of an internal insulation washer.
Figure 27 is a perspective view of a main packing according to the second embodiment.
Figure 28 is a cross-sectional view of the main packing.
Figure 29 is a front perspective view of a cap according to the second embodiment.
Figure 30 is a rear perspective view of the cap.
Figure 31 is a cross-sectional view of the cap.
Figures 32 and 33 are cross-sectional views showing that the refrigerant pipe is connected to the socket of the service valve via the pipe connection device.
Figure 34 is a front perspective view of a pipe connection device according to a third embodiment of the present invention.
Figure 35 is a rear perspective view of the pipe connection device.
Figure 36 is an exploded perspective view of the pipe connection device according to the third embodiment.
Figure 37 is a cross-sectional view of the pipe connection device taken along line 37-37 in Figure 34.
Figure 38 is a front perspective view of the housing according to the third embodiment.
Figure 39 is a rear perspective view of the housing.
Figure 40 is a front perspective view of a grip ring according to the third embodiment.
Figure 41 is a front perspective view of a first packing according to the third embodiment.
Figure 42 is a rear perspective view of a second packing according to the third embodiment.
Figure 43 is a cross-sectional view of the pipe connection device with the indicator unit removed according to the third embodiment.
Figure 44 is a cross-sectional view showing a pipe inserted into the pipe connection device of Figure 37.
Figure 45 is a cross-sectional view showing a valve nipple being inserted into the pipe connection device of Figure 44.
Figure 46 is a cross-sectional view showing the valve nipple fully inserted and secured into the pipe connection device of Figure 45.

### Mode for Invention

The following describes in detail a pipe connection device according to an embodiment of the present invention with reference to the drawings.

The pipe connection device described in the following embodiment of the present invention is described as an example used to connect a refrigerant pipe and a service valve socket, but it should be noted that it should be broadly interpreted as a device for connecting all types of pipes through which fluid flows. Additionally, although the pipe described below is described as the pipe through which refrigerant flows, it should be broadly interpreted to include the pipe through which all types of fluids other than refrigerant can flow.

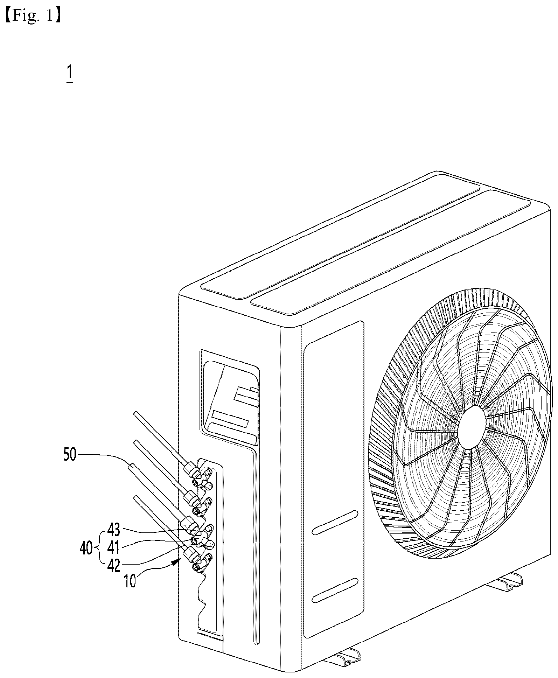

Figure 1 is a view showing a state where a refrigerant pipe is connected to a service valve of an outdoor unit by a pipe connection device according to an embodiment of the present invention.

Referring to Figure 1, an air conditioner according to the present embodiment includes an outdoor unit 1, an indoor unit (not shown), and a refrigerant pipe 50 connecting the outdoor unit 1 and the indoor unit.

In detail, the outdoor unit 1 may be provided in an outdoor space, and the indoor unit may be provided in an indoor space. The outdoor unit 1 and the indoor unit may be connected by a pipe to enable refrigerant circulation.

The refrigerant pipe 50 may include a plurality of connection pipes connecting the outdoor unit 1 and the indoor unit.

Meanwhile, the outdoor unit 1 may include a compressor (not shown) for compressing the refrigerant, an outdoor heat exchanger for heat exchange between the high-temperature and highpressure refrigerant passing through the compressor in a cooling mode and the outdoor air, and an outdoor fan for forcing the outdoor air to flow through the outdoor heat exchanger. The operation of the outdoor fan enables heat exchange between the outdoor air and the refrigerant flowing through the outdoor heat exchanger.

The outdoor unit 1 may further include a service valve 40. The service valve 40 is provided on one side of the outdoor unit 1 and can connect the refrigerant pipe 50 extending from the indoor unit to the outdoor unit 1.

The service valve 40 may include a valve body 41 forming a flow path through which refrigerant flows, an opening/closing portion 42 for opening/closing the valve body 41, a nipple 33 for securing the refrigerant pipe 50 to the valve body 41, and a valve portion 44 that opens or closes the space between the nipple 43 and the valve body 41.

In detail, the opening/closing portion 42 may be provided on one side of the valve body 41. The opening/closing portion 42 may be positioned opposite the nipple 43. The end of the opening/closing portion 42 may have a male thread, and a valve cap with a female thread inside thereof may be screwed onto the male thread of the opening/closing portion 42 to seal the end of the opening/closing portion 24.

The nipple 43 may be provided on the other side of the valve body 41. That is, the nipple 43 may be positioned opposite the opening/closing portion 42. The end of the nipple 43 has a male thread, and a pipe connection device 10 with a female thread inside thereof can be screwed onto the male thread of the nipple 43 to seal the end of the nipple 43.

The valve portion 44 can be provided at the end of the valve body 41. A check valve is installed inside the valve unit 44 to measure the pressure of the fluid inside the valve body 41. A valve cap may be coupled to the end of the valve unit 44 to prevent fluid from leaking outside.

The indoor unit may include an indoor heat exchanger. The indoor unit may further include an indoor fan that blows indoor air to one side of the indoor heat exchanger. Heat exchange between the indoor air and the refrigerant in the indoor heat exchanger may be performed by the operation of the indoor fan.

The indoor unit may further include an indoor unit valve.

The indoor unit valve is provided on one side of the indoor unit and may be connected to the refrigerant pipe 50. The indoor unit valve may connect the refrigerant pipe 50 to the indoor unit. The interior of the indoor unit valve may form a flow path through which the refrigerant flows.

The air conditioner may further include a pipe connection device 10 for connecting the outdoor unit 1 or indoor unit and the refrigerant pipe 50.

The pipe connection device 10 may connect one of the outdoor unit 1 and the indoor unit, and the refrigerant pipe 50 extending from the other of the outdoor unit 1 and the indoor unit.

For example, the pipe connection device 10 may connect the refrigerant pipe 50 extending from the indoor unit to the outdoor unit 1.

In another example, the pipe connection device 10 may connect the refrigerant pipe 50 extending from the outdoor unit 1 to the indoor unit.

Below, the structure and operation of the pipe connection device 10 will be described in detail with reference to the drawings.

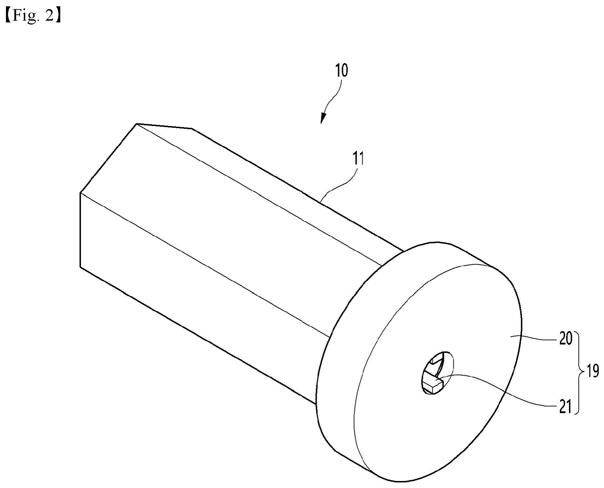

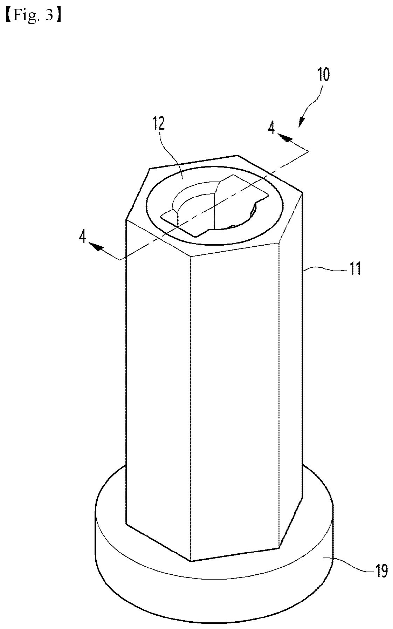

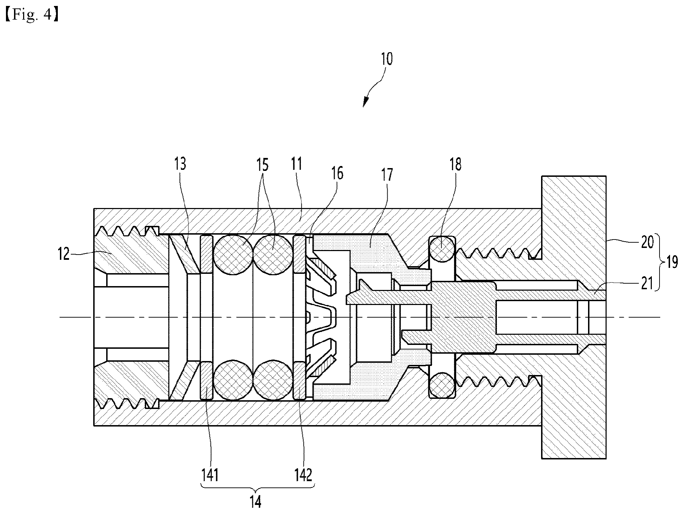

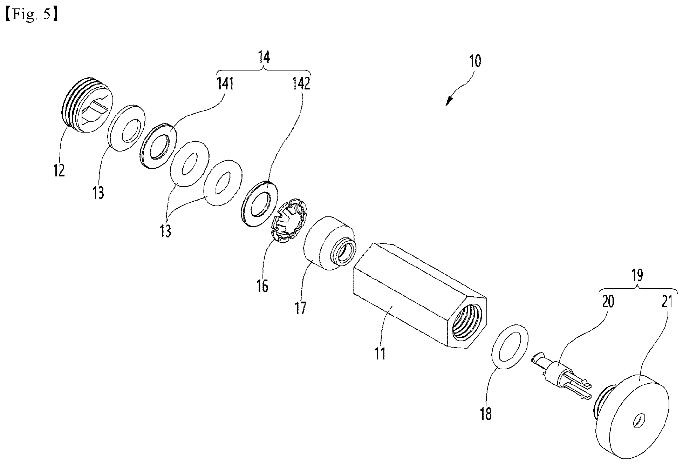

Figure 2 is a bottom view of a pipe connection device according to a first embodiment of the present invention, Figure 3 is a front view of the pipe connection device, Figure 4 is a cross-sectional view of the pipe connection device cut along 4-4 in Figure 3, and Figure 5 is an exploded view of the pipe connection device.

Referring to Figures 2 to 5, the pipe connection device 10 according to the first embodiment of the present invention includes a housing 11 having an internal hollow cylindrical or polygonal shape; a housing nut 12 threadedly connected to one end of the housing 11; a remover 19 threadedly connected to the other end of the housing 11; and a main packing 17, a washer 14, a pipe fixing member, and a sealing member that are accommodated in an inside of the housing 11 corresponding to a position between the housing nut 12 and the remover 19.

In detail, the pipe fixing member includes a grip ring 16. The grip ring 16 contacts the outer surface of the refrigerant pipe 50 and functions as a stopper to allow the refrigerant pipe 50 to move in one direction only through the grip ring 16 and to restrict movement in the opposite direction.

The pipe fixing member may further include a tapered ring 13 that performs the same function as the grip ring 16. Either the grip ring 16 or the tapered ring 13 may be defined as the first stopper, and the other may be defined as the second stopper.

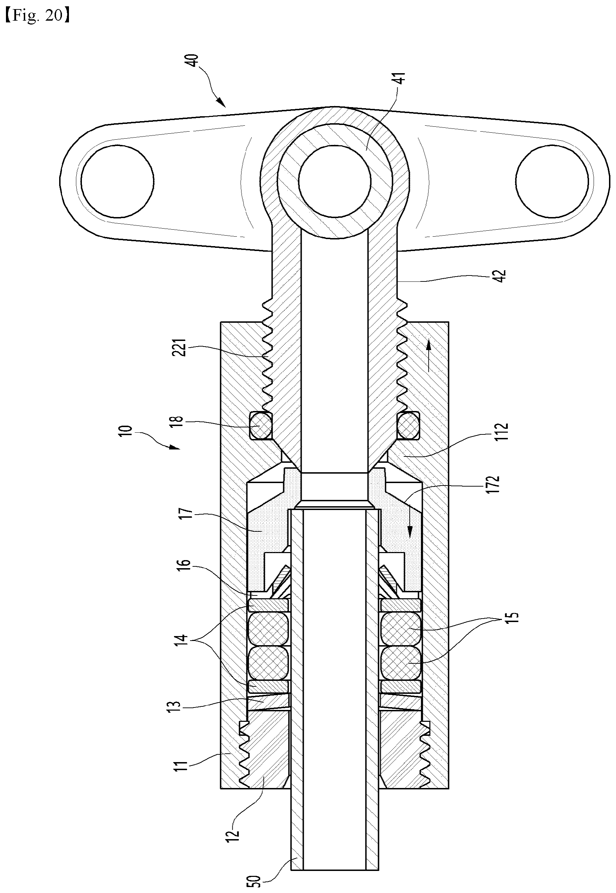

Additionally, the sealing member may include a plurality of O-rings 15 and 18. The plurality of O-rings 15 and 18 may include a pipe O-ring 15 fitted around the outer surface of the refrigerant pipe 50 to prevent refrigerant leakage, and a socket O-ring 18 fitted around the outer surface of the socket 22 (See Figure 20) of the service valve 40 to prevent refrigerant leakage. The pipe O-ring 15 may be provided in one or plurality, for example two pieces, but there is no limit to the number.

Additionally, the washer 14 may include an outer washer 141 interposed between the tapered ring 13 and the pipe O-ring 15, and an inner washer 142 interposed between the pipe O-ring 15 and the grip ring 16.

Meanwhile, the remover 19 is a component that is separated from the housing 11 when the refrigerant pipe 50 is inserted into the housing 11 to a set depth, and includes an indicator 21 and a cap 20.

The indicator 21 may be understood as an indicator member that allows the user to confirm whether the refrigerant pipe 50 has been inserted into the housing 11 to the set depth. The cap 20 can be understood as a cover member that maintains the indicator 21 in a state where it is coupled to the housing 11.

The main packing 17 in a state where is inserted into the housing 11 sets the insertion limit of the refrigerant pipe 50 inserted through the housing nut 12, and is pressurized by the socket 42 to compress the O-rings 15 and 18.

The end of the housing 11 where the housing nut 12 is mounted can be defined as one end or the front end, and the end of the housing 11 where the remover 19 is mounted can be defined as the other end or the rear end.

The main packing 17, grip ring 16, inner washer 142, the pipe O-ring 15, the outer washer 141, and the tapered ring 13 are sequentially inserted into one end of the housing 11, and finally, the housing nut 12 is coupled to close one end of the housing 11.

The socket O-ring 18 is inserted into the other end of the housing 11 and fixed to the inner surface of the housing 11. In this state, the remover 19 is screwed onto the other end of the housing 11.

Below, the structure and function of each component constituting the pipe connection device 10 are described in detail with reference to the drawings.

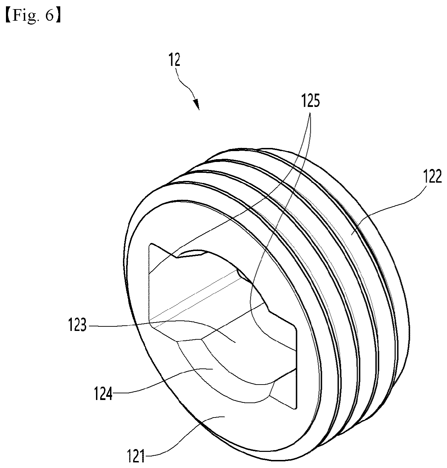

Figure 6 is a perspective view of the housing nut constituting the pipe connection device.

Referring to Figure 6, the housing nut 12 constituting the pipe connection device 10 according to the embodiment of the present invention is inserted to be fixed to one end of the housing 11.

In detail, the housing nut 12 may be made of brass.

The housing nut 12 may be formed in a cylindrical shape, with an external threaded portion 122 formed on its outer surface and a pipe hole 123 formed on its inner side. The pipe hole 123 can be understood as the inner diameter of the housing nut 12.

The worker inserts the refrigerant pipe 50 for connection through the pipe hole 123 into the interior of the housing 11. Therefore, the diameter of the pipe hole 123, i.e., the inner diameter of the housing nut 12, is designed to correspond to the outer diameter of the refrigerant pipe 50 being inserted.

Additionally, a pair of jig grooves 125 may extend from the edge of the pipe hole 123. The pair of jig grooves 125 may be formed symmetrically with respect to the pipe hole 123 at positions facing each other. The jig grooves 125 may completely penetrate the housing nut 12 or may be recessed to a predetermined depth from one end of the housing nut 12 toward the other end.

The jig groove 125 may be understood as a groove for inserting a jig to separate the housing nut 12 from the housing 11.

The guide surface 124 is formed at an angle on one end of the pipe hole 123, i.e., the end where the refrigerant pipe 50 is inserted, so that the refrigerant pipe 50 can be inserted smoothly.

Since the housing nut 12 is detachably connected to one end of the housing 11, there is an advantage in that the internal components in the housing 11 can be separated by separating the housing nut 12 from the housing 11, in order to check the deformation state of the internal components in the housing 11 in the state where the refrigerant pipe 50 is connected to the socket 42 of the service valve 40 via the pipe connection device 10,

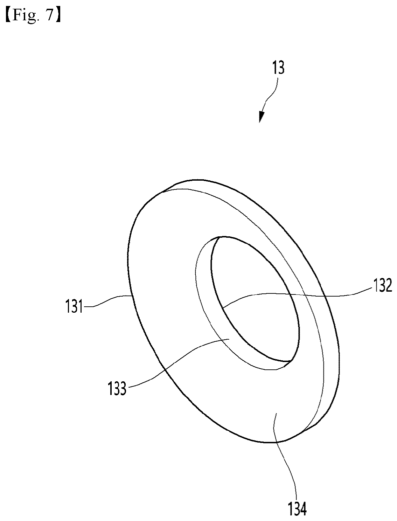

Figure 7 is a perspective view of the tapered ring constituting the pipe connection device.

Referring to Figure 7, the tapered ring 13 is formed as a flat circular ring having a predetermined thickness, to have a pipe hole 133 inside thereof. The pipe hole 133 can be understood as the inner diameter of the tapered ring 13. Furthermore, the tapered ring 13 may be formed in a tapered shape such that the diameter decreases from the front end 131 to the rear end 132. Therefore, when the front end of the tapered ring 13 is placed on a horizontal surface, the rear end of the tapered ring 13 is spaced apart from the horizontal surface.

More specifically, the portion connecting the outer edge of the tapered ring 13 to the pipe hole 133 can be defined as a tapered portion 134. The outer surface (outer edge) of the tapered ring 13 is formed parallel to the inner surface defining the pipe hole 133, the outer diameter of the tapered ring 13 is designed to correspond to the inner diameter of the housing 11, and the inner diameter may be designed to correspond to the outer diameter of the refrigerant pipe 50.

For example, the inner diameter of the tapered ring 13 is designed to be larger than the outer diameter of the refrigerant pipe 50, when the socket 42 of the service valve 40 described below is flattened by the force pushing the main packing 17, the inner diameter of the tapered ring 13 becomes smaller than the outer diameter of the refrigerant pipe 50. As the inner diameter of the tapered ring 13 decreases, the outer surface of the refrigerant pipe 50 becomes indented, causing the inner surface of the tapered ring 13 to firmly grip the refrigerant pipe 50. In other words, it prevents the refrigerant pipe 50 from moving backward.

The tapered ring 13 may be made of a stainless steel material or an engineering plastic material containing POM(Polyoxymethylene) plastic, which has a predetermined elastic force. The front end of the tapered ring 13 is in close contact with the housing nut 12, and the rear end is in close contact with the outer washer 141.

Furthermore, the outer surface of the outer washer 141 is in close contact with the inner surface of the housing 11, and a through hole with a diameter corresponding to the outer diameter of the refrigerant pipe 50 is formed on the inner side of the outer washer 141. Therefore, the refrigerant pipe 50 passing through the pipe hole 133 of the tapered ring 13 subsequently passes through the through hole of the outer washer 141. Furthermore, the inner washer 142 is formed with the same size and shape as the outer washer. The outer washer 141 and inner washer 142 are formed in the shape of flat circular rings.

The inner diameters of the outer washer 141 and inner washer 142 are preferably designed to be larger than the outer diameter of the refrigerant pipe 50, so that the housing 11 does not interfere with the outer surface of the refrigerant pipe 50, when the refrigerant pipe 50 is inserted into the housing 11. Furthermore, the outer diameters of the outer washer 141 and inner washer 142 are preferably designed to be smaller than the inner diameter of the housing 11 so that the outer washer 141 and inner washer 142 do not interfere with the inner surface of the housing 11.

Furthermore, one or more pipe O-rings 15 are interposed between the outer washer 141 and the inner washer 142, and in this embodiment, two pipe O-rings 15 are provided. The outer surface of the pipe O-ring 15 contacts the inner surface of the housing 11, and the inner surface contacts the outer surface of the refrigerant pipe 50.

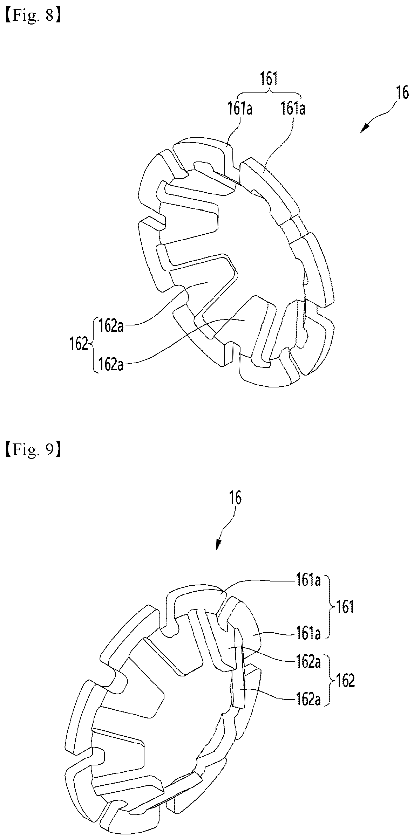

Figure 8 is a front perspective view of the grip ring constituting the pipe connection device, and Figure 9 is a rear perspective view of the grip ring.

Referring to Figures 8 and 9, the grip ring 16 is positioned between the inner washer 142 and the main packing 17. In detail, the grip ring 16 is seated on the front end of the main packing 17, and the front surface of the grip ring 16 is pressed by the inner washer 142.

The grip ring 16 includes a flange 161 that is seated on the front end of the main packing 17 and a gripper 162 that extends from the inner edge of the flange 161.

In detail, the flange 161 is composed of a combination of flange pieces 161a that extend circumferentially for a predetermined length with a predetermined width in the radial direction of the grip ring 16. Furthermore, the gripper 162 is composed of a combination of multiple gripper pieces 162a.

More specifically, among two adjacent flange pieces 161a in the circumferential direction, one inner end of one flange piece 161a and the other inner end of the other flange piece are respectively connected to the front end of the gripper piece 162a. Furthermore, the rear end of the gripper piece 162a extends in the insertion direction of the refrigerant pipe 50 and contacts the outer surface of the refrigerant pipe 50. That is, the inner ends of the two flange pieces adjacent to the circumferential direction of the grip ring 16 are connected to the front ends of the respective gripper pieces 162a, and the rear ends of the gripper pieces 162a contact the refrigerant pipe 50. Therefore, the gripper pieces 162a extend in a tapered shape with a diameter that narrows from the front end to the rear end.

The inner diameter of the grip ring 16, i.e., the diameter of the circle connecting the rear ends of the multiple gripper pieces 162a, is designed to be smaller than the outer diameter of the refrigerant pipe 50. Furthermore, the grip ring 16 is made of elastic stainless steel material, causing the rear ends of the gripper pieces 162a to spread apart when the refrigerant pipe 50 is inserted. Then, the elastic force of the gripper pieces 162a enables the ends of the gripper pieces 162a to strongly press against the outer surface of the refrigerant pipe 50.

As a result, the refrigerant pipe 50 can easily pass through the grip ring 60 from the front end toward the rear end, but it is substantially impossible for it to slip out in the opposite direction due to the resistance of the gripper pieces 162a. If an external force is applied to pull the refrigerant pipe 50 in the reverse direction, the outer surface of the refrigerant pipe 50 may be scratched or damaged by the gripper pieces 162a.

Meanwhile, the outer diameter of the grip ring 16, i.e., the outer diameter of the flange 162, is designed to be smaller than the inner diameter of the housing 11 to prevent interference between the flange 162 and the housing 11.

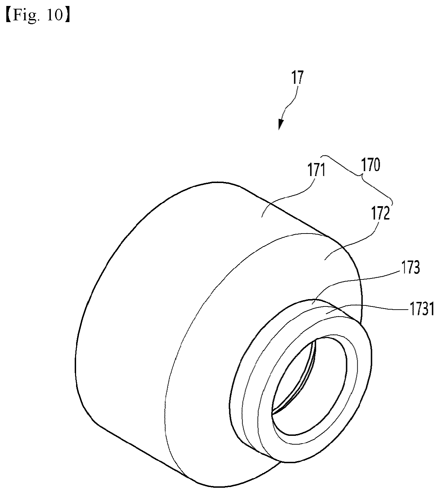

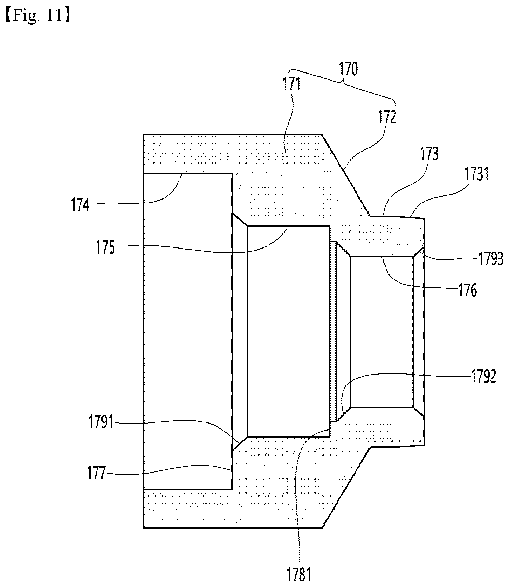

Figure 10 is a perspective view of the main packing constituting the pipe connection device, and Figure 11 is a cross-sectional view of the main packing.

Referring to Figures 10 and 11, the main packing 17 includes a packing head 170 and a packing neck 173 connected to the rear end of the packing head 170.

In detail, the packing head 170 includes a cylindrical portion 171 and a tapered portion 172 connecting the rear end of the cylindrical portion 171 to the front end of the packing neck 173.

In detail, a tapered portion 1731 may also be formed on the rear end of the outer surface of the packing neck 173, and the tapered portion 172 may be defined as a front tapered portion, and the tapered portion 1731 may be defined as a rear tapered portion.

Inside the main packing 17, a first inner diameter section 174, a second inner diameter section 175, and a third inner diameter section 176 may be formed consecutively from the front end of the cylindrical section 171. The diameter of the first inner diameter section 174 is larger than the diameter of the second inner diameter section 175, and the diameter of the second inner diameter section 175 is designed to be larger than the diameter of the third inner diameter section 176. The diameter of the second inner diameter 175 is designed to correspond to the outer diameter of the refrigerant pipe 50. To minimize the flow resistance of the refrigerant flowing in either the forward or reverse direction, the diameter of the third inner diameter 176 may be formed to correspond to the inner diameter of the refrigerant pipe 50.

A first stepped portion 177 is formed between the first inner diameter portion 174 and the second inner diameter portion 175, and a second stepped portion 178 is formed between the second inner diameter portion 175 and the third inner diameter portion 176.

Furthermore, the first stepped portion 177 and the second inner diameter portion 175 are connected by a first inclined surface 1791, and the second stepped portion 178 and the third inner diameter portion 176 are connected by a second inclined surface 1792. Furthermore, the first inclined surface 1791 and the second inclined surface 1792 are inclined in such a way that their diameters decrease in the insertion direction of the refrigerant pipe 50.

The end of the refrigerant pipe 50 is seated on the second stepped portion 178, and the refrigerant pipe 50 is inserted into the main packing 17 only until it is seated on the second stepped portion 178.

Additionally, an expansion portion 1793 is formed at the rear end of the third inner diameter portion 176, which can be in close contact with the front end of the socket 42. Furthermore, the flange 161 of the grip ring 16 is seated on the front end of the main packing 17 or the front end of the cylindrical portion 171.

The internal space of the main packing 17 defined by the first inner diameter portion 174 and the first stepped portion 177 can be understood as an avoidance space for the gripper 162 forming the grip ring 16. In other words, since the internal space of the main packing 17 is sufficiently secured as much as the diameter of the first inner diameter portion 174, even if the gripper 162 is expanded while the refrigerant pipe 50 passes through the grip ring 16, the gripper 162 does not interfere with the inner circumferential surface of the main packing 17.

In addition, with the formation of the first inclined surface 1791, the end of the refrigerant pipe 50 can be smoothly guided into the second inner diameter 175 during the insertion process of the refrigerant pipe 50.

The main packing 17 can be made of POM plastic, which has good heat resistance.

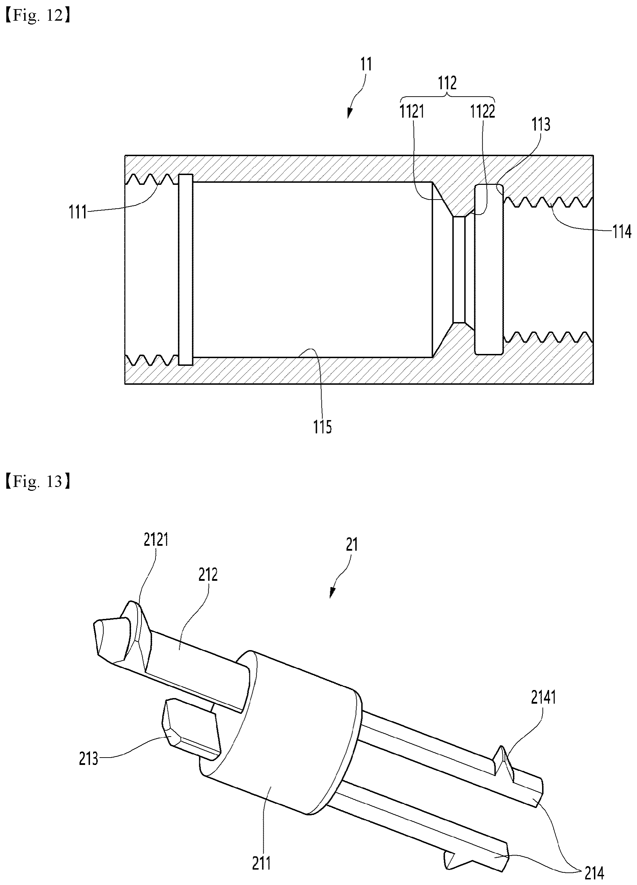

Figure 12 is a cross-sectional view of the housing constituting the pipe connection device.

Referring to Figure 12, the housing 11 may be formed in a tubular shape extending to a predetermined length, and the outer surface may be circular or polygonal.

In detail, a front female thread portion 111 may be formed on the inner surface of one end of the housing 11, and a rear female thread portion 114 may be formed on the inner surface of the other end of the housing 11. In this embodiment, the inner diameter of the front female thread portion 111 is designed to be larger than the inner diameter of the rear female thread portion 114, but this is not necessarily limited to this configuration.

The housing nut 12 is coupled to the front female thread portion 111, and the cap 20 or socket 42 is coupled to the rear female thread portion 114.

An O-ring groove 113 is formed at a predetermined depth on the front end of the rear female thread portion 114, and the socket O-ring 18 is inserted into the O-ring groove 113. Furthermore, a packing sleeve 112 protrudes from the inner surface of the housing 11 corresponding to the front end of the O-ring groove 113.

The packing sleeve 112 can be understood as a sleeve or ring shape protruding a predetermined length from the inner surface towards the center of the housing 11. A front inclined surface 1121 is formed on the front side of the packing sleeve 112, and a rear inclined surface 1122 is formed on the rear end of the packing sleeve 112.

In detail, the slope of the front inclined surface 1121 may be designed to be the same as the slope of the tapered portion 172 (or front tapered portion) constituting the packing head 170. That is, the main packing 17 can be inserted into the housing 11 until the tapered portion 172 is in close contact with the front inclined surface 1121.

Furthermore, the rear inclined surface 1122 may be defined as the inclined surface where the end of the socket 42 of the service valve 40, which will be described later, is in close contact.

The internal space of the housing 11 extending from the rear end of the front female thread portion 111 to the front end of the packing sleeve 112 can be defined as a receiving space 115, and the diameter of the receiving space 115 can be defined as an inner diameter of the housing 11. Furthermore, the inner diameter of the packing sleeve 112 can be designed to correspond to the outer diameter of the packing neck 173 of the main packing 17. Furthermore, the diameter of the O-ring groove 113 is designed to be smaller than the diameter of the receiving space 115, i.e., the inner diameter of the housing 11, and the inner diameter of the front female thread portion 111 may be designed to be the same as the inner diameter of the housing 11, but this is not limited thereto.

Figure 13 is a perspective view of the indicator constituting the remover.

Referring to Figure 13, the indicator 21 can be defined as the remover 19 together with the cap 20, and is used to visually inform the operator whether the refrigerant pipe 50 inserted into the housing 11 has been sufficiently inserted to the set depth.

In detail, when the cap 20 is coupled to the rear female thread portion 114 of the housing 11, the indicator 21 is inserted into the inside of the housing 11 and is not exposed outside the cap 20.

Furthermore, when the refrigerant pipe 50 is inserted into the inside of the housing 11 by passing through the housing nut 12, the end of the refrigerant pipe 50 pushes out the indicator 21. When the refrigerant pipe 50 is inserted to the set depth, a portion of the indicator 21 protrudes outside the cap 20, allowing the operator to recognize that the refrigerant pipe 50 has been sufficiently inserted to the set depth. In this state, the operator unscrews the cap 20 to separate it from the housing 11, and then connects the socket 42 of the service valve 40 to the rear female thread portion 114.

The structure of the indicator 21 is described in detail below.

The indicator 21 includes a cylindrical body portion 211, a contact leg 212 extending from the front of the body portion 211, and a sliding leg 214 extending from the rear of the body portion 211.

An engagement step 2121 protrudes from the outer peripheral surface of the end of the contact leg 212, and the end of the refrigerant pipe 50 inserted into the interior of the housing 11 engages with the engagement step 2121. The engagement step 2121 is located at a point spaced forward from the second shoulder portion 178 of the main packing 17 when the cap 20 is fully coupled to the rear female thread portion 114 of the housing 11. Here, "forward" refers to the direction of the housing nut 12.

A balancing leg 213 may extend from the front of the body portion 211. The balancing leg 213 is provided to minimize skewing to one side when the body portion 211 moves along the inside of the cap 20 by being pushed by the refrigerant pipe 50. The balancing leg 213 may extend to a different length than the contact leg 212, for example, it may extend to a shorter length than the contact leg 212.

Meanwhile, the sliding leg 214 includes a pair of legs extending parallel to each other from the rear of the body portion 211, and a hook 2141 protrudes from an outer surface of each of the pair of legs.

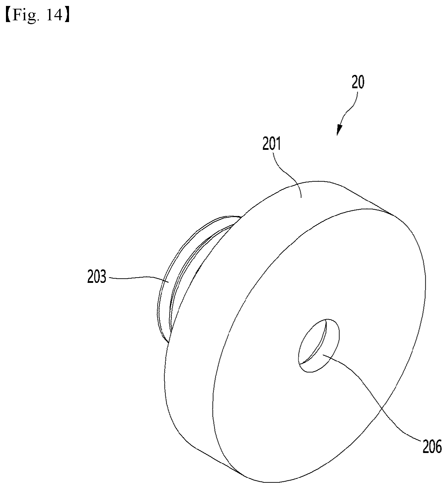

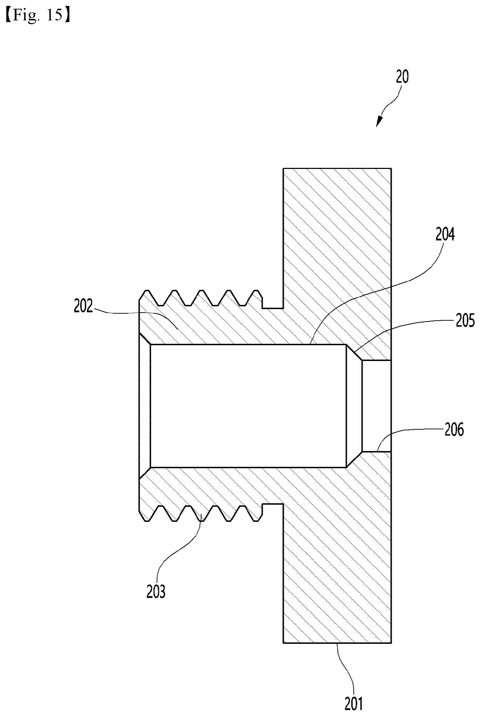

Figure 14 is a rear perspective view of the cap constituting the remover, and Figure 15 is a cross-sectional view of the cap.

Referring to Figures 14 and 15, the cap 20 includes a circular cap body 201 having a predetermined thickness and diameter, and a guide sleeve 202 extending from the front of the cap body 201.

In detail, the guide sleeve 202 has an outer diameter smaller than that of the cap body 201 and extends for a predetermined length, with a male thread portion 203 formed on its outer circumference to be threadedly coupled to the rear female thread portion 114 of the housing 11.

Additionally, a guide hole 204 is formed inside the cap 20 to accommodate the body portion 211 of the indicator 21. The guide hole 204 extends from the front end of the guide sleeve 201 to a point spaced forward from the rear end of the cap body 201. The diameter of the guide hole 204 may be formed to correspond to the outer diameter of the body portion 211.

Additionally, a hook extraction hole 206 extends forward from the rear center of the cap body 201, and the hook extraction hole 206 has a diameter smaller than that of the guide hole 204. Therefore, a hook engagement step 205 is formed at the point where the guide hole 204 and the hook extraction hole 206 meet, and the hook engagement step 205 can be understood as an inclined surface connecting the rear end of the guide hole 204 and the front end of the hook extraction hole 206.

When the indicator 21 is coupled to the cap 20, the body portion 211 and the sliding leg 214 are inserted into the guide hole 204, and the engagement hook 2141 of the sliding leg 214 engages with the hook engagement step 205. In this state, the end of the sliding leg 214 is located on the surface passing through the rear of the cap body 201 or at a point spaced forward from the rear of the cap body 201. Therefore, the sliding leg 214 is not easily visible to the operator.

The assembly sequence of the pipe connection device is described below.

First, the main packing 17 is inserted from the front end of the housing 11 and seated in the packing sleeve 112. Then, the socket O-ring 18 is inserted into the O-ring groove 113. Here, the coupling action of the main packing 17 and the coupling action of the socket O-ring 18 may be performed simultaneously, or one action may be performed before the other.

In a state where the main packing 17 and socket O-ring 18 are fixed inside the housing 11, the grip ring 16, inner washer 142, pipe O-ring 15, outer washer 141, and tapered ring 13 are sequentially inserted into the interior of the housing 11. Then, the housing nut 12 is coupled to the front end of the housing 11, and the remover 19 is coupled to the rear end of the housing 11.

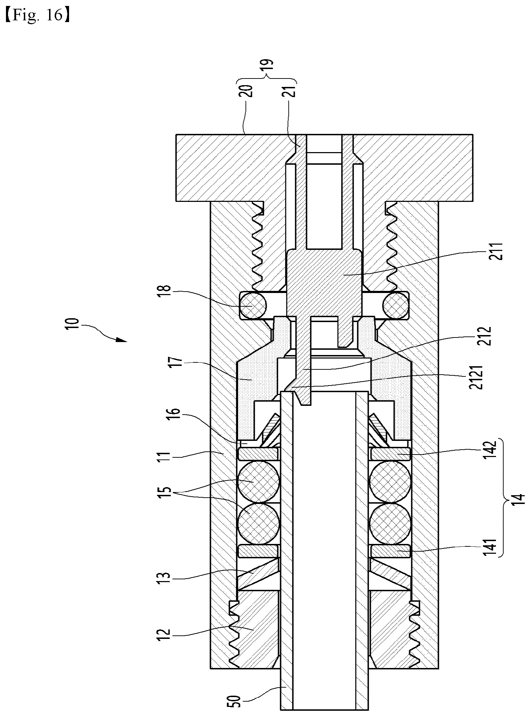

Figures 16 to 18 are cross-sectional views showing the process of coupling the refrigerant pipe to the pipe connection device in sequence.

Referring to Figure 16, the operator prepares the pipe connection device 10 with the remover 19 attached, and inserts one end of the refrigerant pipe 50 for connection into the interior of the housing 11 from a side of the housing nut 12. Then, the operator inserts the refrigerant pipe 50 into the housing 11 until the end of the refrigerant pipe 50 contacts the contact leg 212 of the indicator 21, specifically the engagement step 2121.

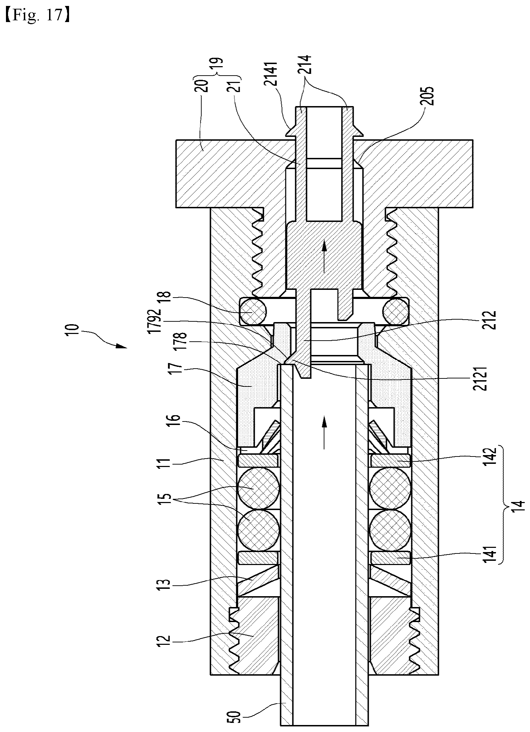

Then, as shown in Figure 17, the body portion 211 of the indicator 21 retreats along the guide hole 204 inside the cap 20. Furthermore, the engagement hook 2141 of the sliding leg 214 is slid along the hook engagement step 205 of the cap 20, and a portion of the sliding leg 214 including the engagement hook 2141 protrudes outside the cap 20.

Furthermore, when the refrigerant pipe 50 is pushed further in a state where the end of the refrigerant pipe is in contact with the engagement step 2121, the end of the refrigerant pipe 50 engages with the second stepped portion 178 of the main packing 17. Furthermore, the engagement step 2121 of the contact leg 212 gets in close contact with the second inclined surface 1792. At this state, insertion of the refrigerant pipe 50 is stopped. That is, when the end of the refrigerant pipe 50 touches the second stepped portion 178, the refrigerant pipe 50 is considered to be sufficiently inserted into the housing 11.

Furthermore, when the end of the refrigerant pipe 50 contacts the second stepped portion 178, leakage of the refrigerant flowing along the refrigerant pipe 50 outside the main packing 17 is primarily prevented.

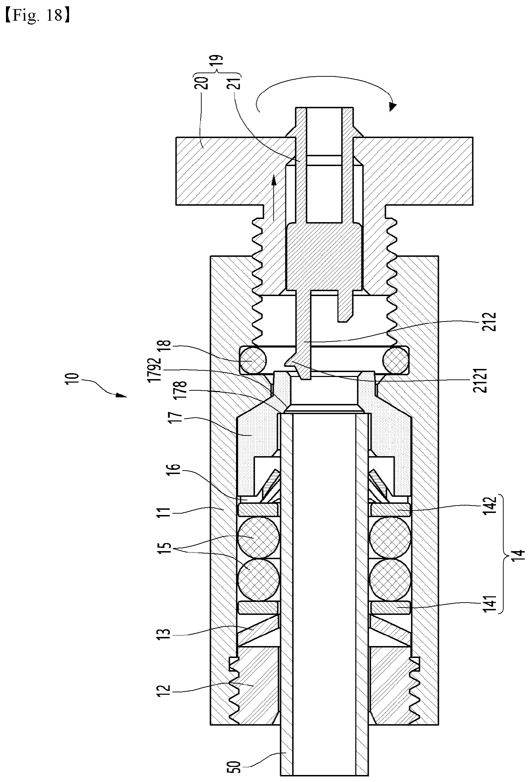

Meanwhile, as shown in Figure 18, with a portion of the sliding leg 214 of the indicator 21 protruding outward, the operator rotates the cap 20 to separate the cap 20 from the housing 11.

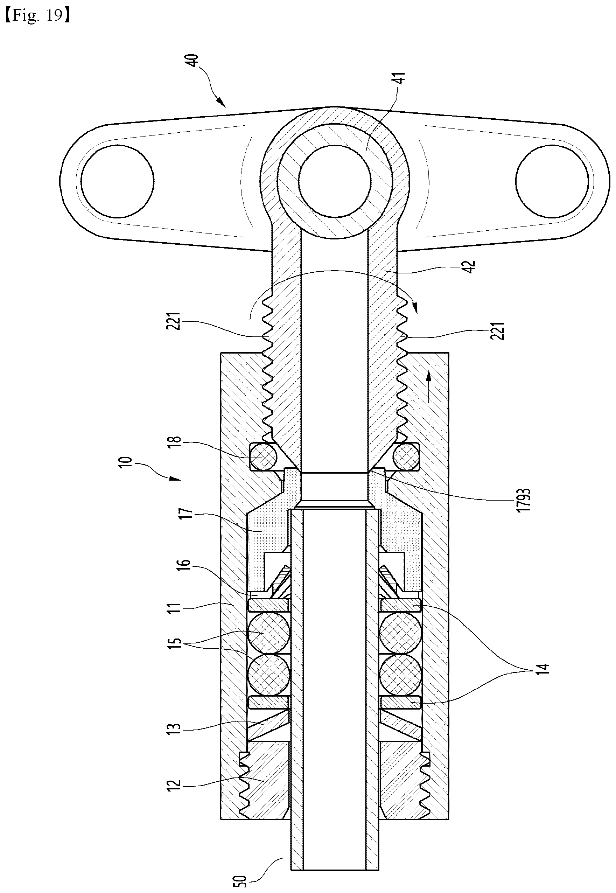

Figures 19 and 20 are cross-sectional views showing how the refrigerant pipe is connected to the socket of the service valve via the pipe connection device.

Referring to Figures 19 and 20, when the remover 19 is separated from the rear end of the housing 11, the socket 42 extending from the valve body 41 of the service valve 40 becomes insertable into the rear end of the housing 11.

In detail, the operator thread couples the socket 42 to the rear end of the housing 11 where the refrigerant pipe 50 is inserted. Then, as the socket 42 is progressively inserted into the interior of the housing 11, it comes into close contact with the expanded portion 1793 formed on the packing neck 173 of the main packing 17. That is, the end of the socket 42 and the end of the refrigerant pipe 50 face each other at a distance corresponding to the length of the packing neck 173.

In this state, when the housing 11 is rotated further to insert the socket 42 into the interior of the housing 11, the end of the socket 42 pushes the rear end of the packing neck 17 toward the front end of the housing 11. Then, as shown in Figure 20, the packing neck 17 moves forward toward the housing nut 12, causing the front tapered portion 172 of the main packing 17 to be spaced apart from the front inclined surface 1121 of the packing sleeve 112. Furthermore, the tapered end of the socket 42 is tightly pressed against the expanded portion 1793, thereby preventing refrigerant leakage through the contact surface between the socket 42 and the packing neck 173.

Furthermore, the tapered end of the socket 42 is tightly fitted to the rear inclined surface 1122 of the packing sleeve 112, thereby preventing refrigerant leakage. Additionally, the socket O-ring 18 prevents refrigerant leakage toward the rear end of the housing 11.

Furthermore, as the main packing 17 advances, the grip ring 16 and inner washer 142 in close contact with the front end of the main packing 17 press against the pair of pipe O-rings 15. As a result, the cross-section of the pipe O-ring 15 deforms from a circular shape to an elliptical shape and eventually to a nearly rectangular shape. As the pipe O-rings 15 are compressed, the inner surface of the pipe O-rings 15 strongly presses against the outer surface of the refrigerant pipe 50, and the outer surface of the O-rings strongly presses against the inner surface of the housing 11, ensuring sufficient sealing between the refrigerant pipe 50 and the housing 11. Furthermore, due to the pressure applied by the pipe O-ring 15, the outer surface of the refrigerant pipe 50 may be indented to form a ring-shaped groove.

In detail, as the main packing 17 is pressed forward by the socket 42, the end of the refrigerant pipe 50 and the second stepped portion 178 are strongly pressed together, thereby primarily preventing refrigerant leakage, and the refrigerant leakage is secondarily prevented by the pipe O-ring 15.

In addition, the pressure applied to the main packing 17 is ultimately transmitted to the tapered ring 13, causing the tapered ring 13 to be deformed into a shape close to a flat state. As a result, the inner surface of the tapered ring 13 strongly presses against the outer surface of the refrigerant pipe 50, preventing the refrigerant pipe 50 from coming off from the housing 11. At this time, a ring-shaped indentation may form on the outer surface of the refrigerant pipe 50 due to the pressure applied by the tapered ring 13.

The reverse movement of the refrigerant pipe 50, i.e., movement in the direction of separation from the pipe connection device 10, is inhibited by the gripper 162 of the grip ring 16 and the tapered ring 13.

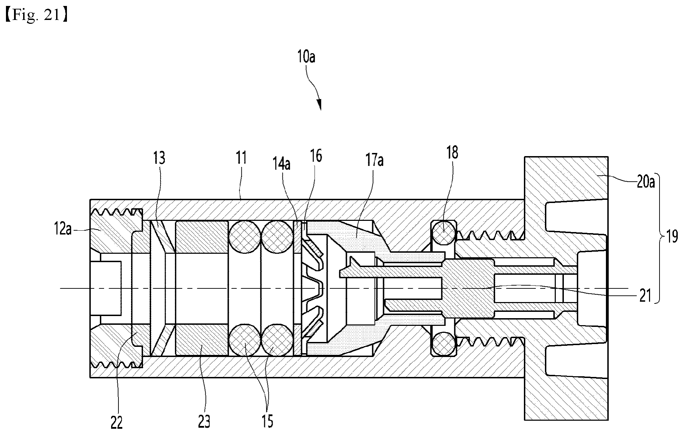

Figure 21 is a cross-sectional view of the pipe connection device according to a second embodiment of the present invention.

Referring to Figure 21, the pipe connection device 10a according to the second embodiment of the present invention is identical to the pipe connection device 10 according to the first embodiment in many aspects, but differs in some components and the shapes of the components. Hereinafter, only the parts that differ from the pipe connection device 10 according to the first embodiment will be described, and the same parts will be referred to as described in Figures 1 to 20.

Additionally, for components that differ in shape from those in the pipe connection device 10 according to the first embodiment, the same names will be used but different drawing symbols will be assigned. For components that are identical in shape and function, the same names and drawing symbols will be assigned.

Specifically, the structure in that the pipe connection device 10a according to this embodiment has a housing nut 12a connected to one end of the housing 11 and a remover 19 connected to the other end thereof, with a tapered ring 13, pipe O-ring 15, washer 14a, grip ring 16, and main packing 17a are sequentially arranged between the housing nut 12a and the remover 19, and a socket O-ring 18 is inserted into the O-ring groove 113 of the housing 11 is substantially the same as the structure of the pipe connection device 10 according to the previous embodiment.

However, in this embodiment, the feature that an internal insulating washer 23 is interposed between the pipe O-ring 15 and the tapered ring 13, and an external insulating washer 22 is interposed between the tapered ring 13 and the housing nut 12a, can be said to be different from the previous embodiment.

The internal insulating washer 23 can be considered equivalent to the outer washer 141 in the previous embodiment, but its material and thickness differ from those of the outer washer 141 to ensure insulation performance. Specifically, while the outer washer 141 is made of stainless steel, the internal insulating washer 23 and the external insulating washer 22 can be made of a polyester-based engineering plastic material including PBT(polybutylene terephthalate).

The internal insulating washer 23 and the external insulating washer 22 may be designed to be thicker than the outer washer 141. Additionally, the internal insulating washer 23 may be designed to be thicker than the external insulating washer 22, but this is not necessarily limited thereto.

Below, the pipe connection device 10a according to the second embodiment is described in detail with reference to the drawings, focusing on components that have different shapes or functions from those of the pipe connection device 10 according to the first embodiment.

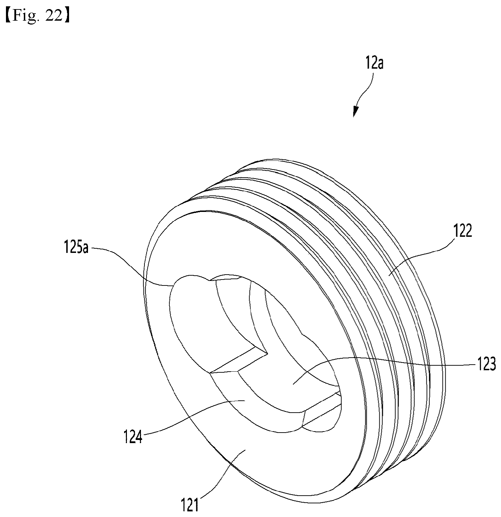

Figure 22 is a front perspective view of the housing nut according to the second embodiment,

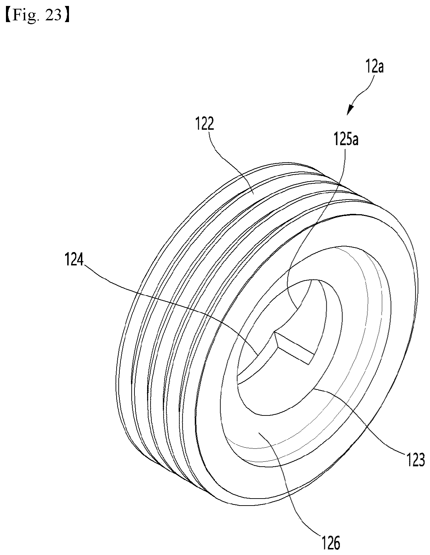

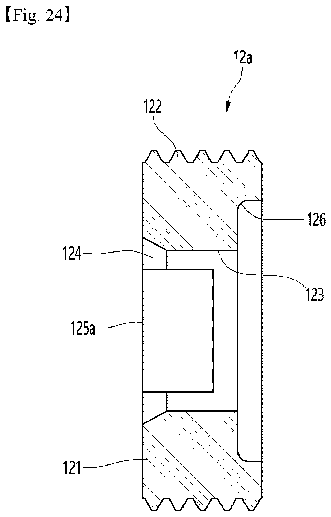

Figure 23 is a rear perspective view of the housing nut, and Figure 24 is a cross-sectional view of the housing nut.

Referring to Figures 22 to 24, the housing nut 12a according to this embodiment includes a nut body 121 having a male thread portion 122 formed on its outer surface.

In detail, a pipe hole 123 having a diameter corresponding to the outer diameter of the refrigerant pipe 50 is formed at the center of the nut body 121, and a pair of jig grooves 125a extending radially from the edge of the pipe hole 123 are formed. The pair of jig grooves 125a are formed at points facing each other and can be recessed to a predetermined depth from the front to the rear of the nut body 121. The jig grooves 125a formed in the housing nut 12a according to this embodiment may be formed in a semicircular shape. Furthermore, a guide surface 124 is formed at an angle at the front end of the pipe hole 123 to guide the insertion of the refrigerant pipe 50.

Additionally, a washer seating step 126 may be formed on the back side of the nut body 121. The washer seating step 126 may have a diameter smaller than that of the nut body 121 and be stepped with a predetermined depth toward the front end of the nut body 121.

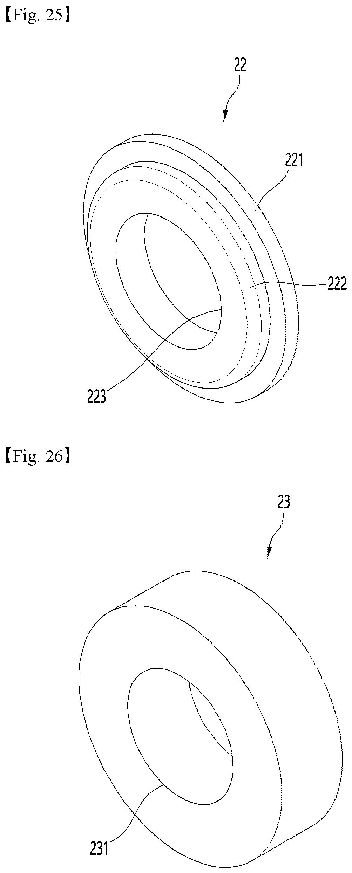

Figure 25 is a perspective view of the external insulating washer.

Referring to Figure 25, the external insulating washer 22 includes a circular washer body 221 and an inserting flange 222 that protrudes from the front of the washer body 221.

In detail, the inserting flange 222 has a diameter smaller than that of the washer body 221 and protrudes from the front surface of the washer body 221. Furthermore, a pipe hole 223 having a diameter corresponding to the outer diameter of the refrigerant pipe 50 is formed at the center of the external insulating washer 22.

The inserting flange 222 is seated on the washer seating flange 126 of the housing nut 12a, thereby minimizing the transmission of heat conducted through the housing nut 1121 into the interior of the housing 11.

Figure 26 is a perspective view of the internal insulating washer.

Referring to Figure 26, the internal insulation washer 23 has a diameter corresponding to the inner diameter of the housing 11 and may be formed in a cylindrical shape with a pipe hole 231 on the inner side. The pipe hole 231 has a diameter corresponding to the outer diameter of the refrigerant pipe 50.

Additionally, the internal insulation washer 23 may be formed from the same material as the external insulation washer 22. Furthermore, the internal insulation washer 23 may be formed to have a length corresponding to at least 1/8 to 1/9 of the length of the housing 11.

Furthermore, to enhance the insulation effect, the combined length of the inner insulation washer 23 and the outer insulation washer 22 may be designed to be longer than the length from the front end to the rear end of the pipe O-ring 15. Here, the length between the front and rear ends of the pipe O-ring 15 can be understood as the length of the pipe O-ring 15 in its final compressed state. However, it should be noted that the length of the pipe O-ring 15 between the front end and rear end before the O-ring 15 is compressed can also be designed.

In addition, in order to increase the insulation effect, the sum of the lengths of the inner insulation washer 23 and the outer insulation washer 22 can be designed to be longer than the length of the housing nut 12.

The pipe connection device 10a according to this embodiment includes not only a structure in which both the internal insulating washer 23 and the external insulating washer 22 are installed, but also a structure in which at least one of the two insulating washers is installed.

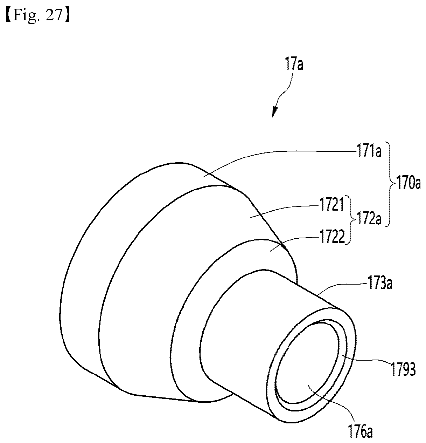

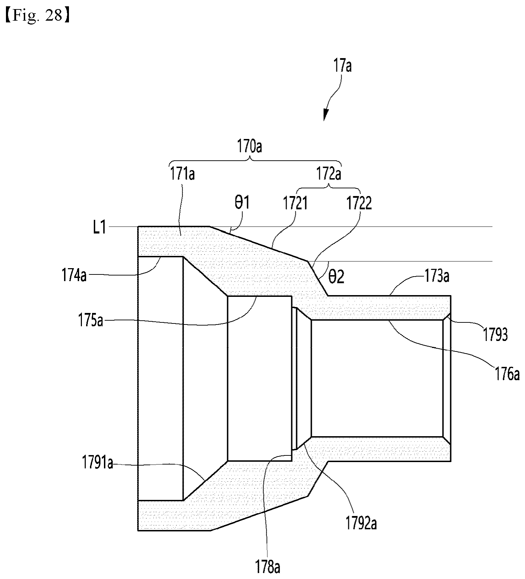

Figure 27 is a perspective view of the main packing according to the second embodiment, and Figure 28 is a cross-sectional view of the main packing.

Referring to Figures 27 and 28, the main packing 17a includes a packing head 170a and a packing neck 173a extending from the rear end of the packing head 170a.

In detail, the packing head 170a may include a cylindrical portion 171a and a tapered portion 172a extending from the rear end of the cylindrical portion 171a. Furthermore, the tapered portion 172a may include a first tapered portion 1721 and a second tapered portion 1722.

The first tapered portion 1721 may be formed longer than the second tapered portion 1722. Furthermore, the angle θ1 formed between the line L1 passing through the cylindrical portion 171a and the first tapered portion 1721 may be designed to be smaller than the angle θ2 formed between the line L1 and the second tapered portion 1722. Furthermore, an expanded portion 1793 may be formed on the inner surface of the rear end of the packing neck 173a.

The length of the cylindrical portion 171a may be designed to be shorter than the length of the cylindrical portion 171 of the main packing 17 according to the previous embodiment.

Furthermore, the interior of the main packing 17a may be provided with, from the front end of the cylindrical portion 171a, a first inner diameter portion 174a and a second inner diameter portion 175a, and the diameter of the first inner diameter portion 174a may be designed to be larger than the diameter of the second inner diameter portion 175a. A third inner diameter portion 176a may be formed inside the packing neck 173a.

The rear end of the first inner neck 174a and the front end of the second inner neck 175a are connected by a first inclined surface 1791a, and a stepped portion 178a may be formed at the rear end of the second inner neck 175a. The end of the refrigerant pipe 50 may be inserted into the interior of the housing 11 until it is seated on the stepped portion 178a.

By extending the length of the first inclined surface 1791a and the length of the packing neck 173a longer than in the previous embodiment and reducing the length of the cylindrical portion 171, the heat resistance performance can be further improved.

Meanwhile, the stepped portion 178a and the third inner diameter portion 176a are connected by the second inclined surface 1792a.

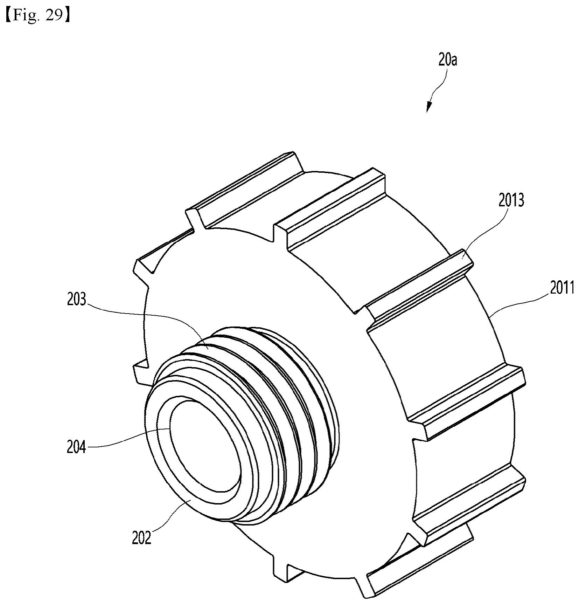

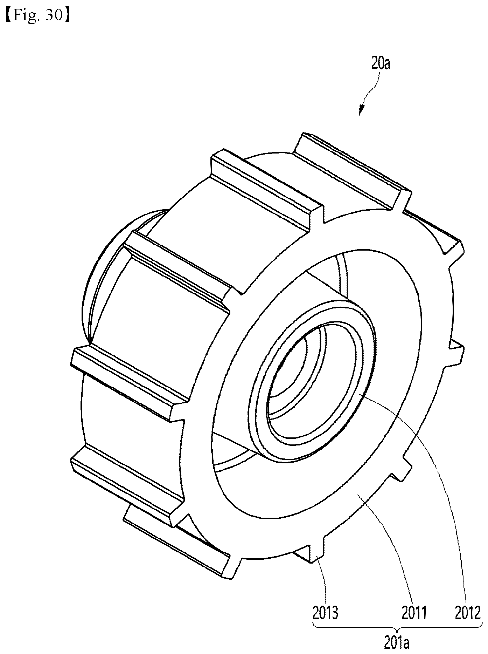

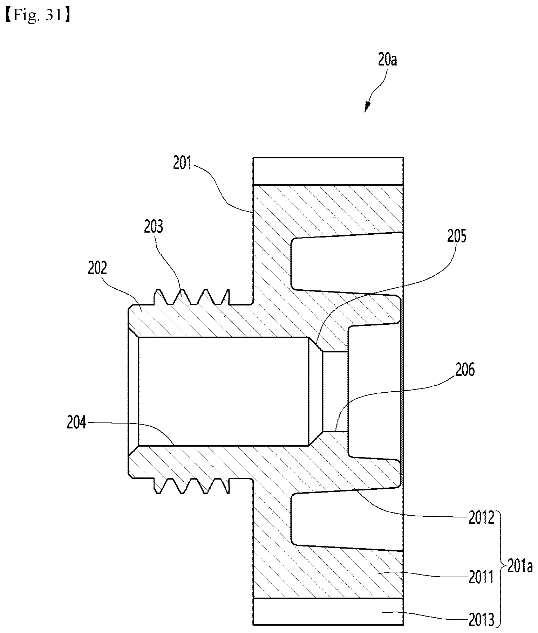

Figure 29 is a front perspective view of the cap according to the second embodiment, Figure 30 is a rear perspective view of the cap, and Figure 31 is a cross-sectional view of the cap.

Referring to Figures 29 to 31, the cap 20a according to this embodiment includes a cap body 201a and a guide sleeve 202 extending from the front of the cap body 201a.

The outer surface of the guide sleeve 202 has a male thread portion 203, and the interior of the guide sleeve 202 has a guide hole 204.

The cap body 201a includes an outer cap body 2011 and an inner cap body 2012. The inner cap body 2012 is formed on the inner side of the outer cap body 2011. That is, both the outer cap body 2011 and the inner cap body 2012 are cylindrical in shape, but the outer diameter of the inner cap body 2012 may be smaller than the inner diameter of the outer cap body 2012.

Additionally, a hook extraction hole 206 is formed on the inner side of the inner cap body 2012, and the hook extraction hole 206 is coaxial with the guide hole 204 but formed with a smaller diameter than the guide hole 204. Furthermore, the rear end of the guide hole 204 and the front end of the hook extraction hole 206 are connected by a hook engagement step 205. The engagement hook 2141 of the indicator 21 is seated on the hook engagement step 205.

Additionally, a plurality of grip protrusions 2013 are formed at intervals in the circumferential direction on the outer surface of the outer cap body 2011. Since the operator can hold the grip protrusions 2013 with their hands and rotate the cap 20a, the locking or unlocking operation of the cap 20a can be performed more smoothly compared to a structure without the grip protrusions 2013.

Furthermore, even if the indicator 21 is pushed by the refrigerant pipe 50 and the engagement hook 2141 moves away from the hook engagement step 205, the end of the sliding leg 214 does not protrude beyond the rear end of the inner cap body 2012, preventing the sliding leg 214 from scratching the user's body.

The assembly sequence of the pipe connection device according to this embodiment is performed in the same manner as in the previous embodiment, except that the outer washer 141 is replaced with the internal insulating washer 23, and an additional step of further inserting the external insulating washer 22 in front of the tapered ring 13 before combining the housing nut 12 with the housing 11 is added.

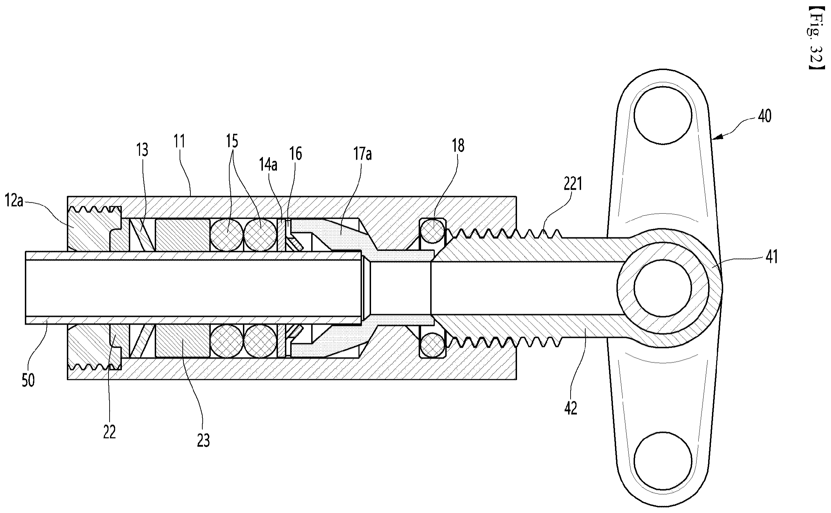

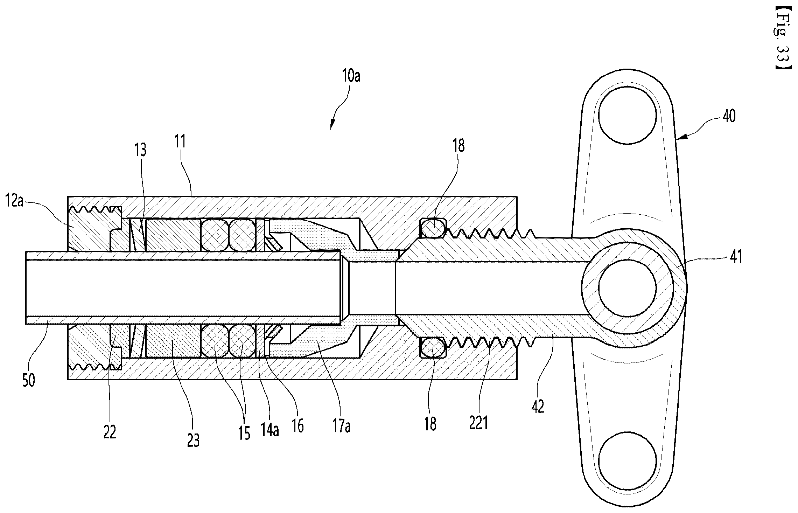

Figures 32 and 33 are cross-sectional views showing how the refrigerant pipe is connected to the socket of the service valve by the pipe connection device.

The process of inserting the refrigerant pipe 50 into the housing 11 and separating the remover 19 is the same as described in the previous embodiment, so the duplicate description is omitted.

Referring to Figures 32 and 33, when the socket 42 of the service valve 40 is inserted into the rear end of the housing 11, the main packing 17a presses the refrigerant pipe 50 and internal components including the grip ring 16 toward the housing nut 12a. Then, as described in the previous embodiment, the pipe O-ring 15 is compressed, thereby improving the airtightness between the refrigerant pipe 50 and the housing 11.

Furthermore, the tapered ring 13 is flattened, narrowing the gap between the external insulating washer 22 and the internal insulating washer 23. Of course, in this process, the internal insulating washer 23 is also compressed, shortening its length.

According to this embodiment, by providing the external insulating washer 22 and the internal insulating washer 23 inside the housing 11, heat conducted through the housing nut 12a can be minimized from penetrating into the interior of the housing 11.

Additionally, as in the previous embodiment, since the refrigerant pipe 50 and the socket 42 do not come into direct contact, there is the advantage that galvanic corrosion caused by contact between dissimilar materials does not occur.

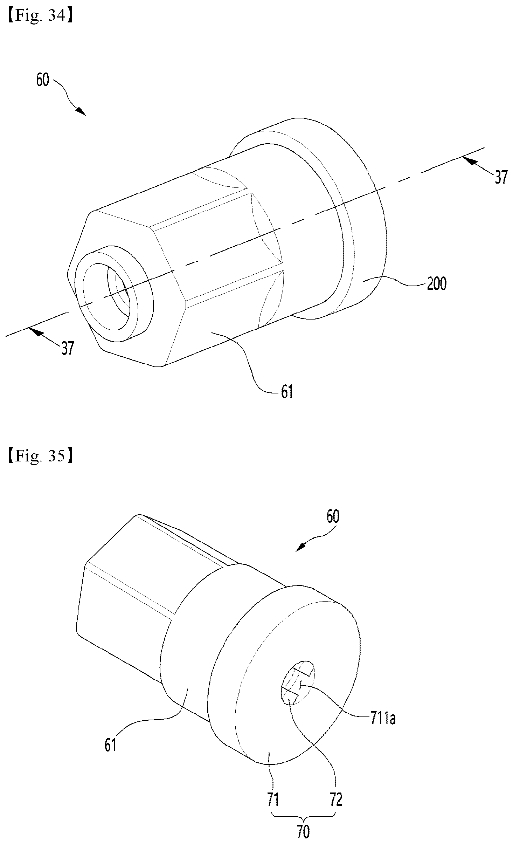

Figure 34 is a front perspective view of the pipe connection device according to the third embodiment of the present invention, and Figure 35 is a rear perspective view of the pipe connection device.

Referring to Figures 34 and 35, the pipe connection device 60 according to the embodiment of the present invention connects the service valve 40 of the outdoor unit 1 to the refrigerant pipe 50 and may be formed in a cylindrical shape extending over a predetermined length.

In detail, one side of the pipe connection device 60 is connected to the refrigerant pipe 50, and the other side of the pipe connection device 60 is connected to the nipple 43 of the service valve 40. Specifically, the end of the refrigerant pipe 50 is inserted into the inner side of one end of the pipe connection device 60, and the nipple 43 is inserted into the inner side of the other end of the pipe connection device 60.

For the sake of understanding the invention, directions are defined.

With reference to Figure 34, the "axial direction" refers to the direction in which the pipe connection device 60 extends lengthwise. In other words, the lengthwise direction of the pipe connection device 60 can be understood to mean the direction in which the central axis of the pipe connection device extends.

Among the "axial direction," the direction from the center of the pipe connection device 60 toward the end where the refrigerant pipe 50 is connected is defined as the "frontward direction," and the opposite direction, i.e., the direction from the center of the pipe connection device 60 toward the end where the nipple 43 is connected, is defined as the "rearward direction."

As seen in the drawings, the frontward direction of the pipe connection device 60 is toward the left along the central axis, and the rearward direction is toward the right along the central axis.

The pipe connection device 60 may include a housing 61 and an indicator unit 70 that is detachably connected to the rear end of the housing 61. The indicator unit 70 can be understood as a component for accurately inserting the refrigerant pipe 50 into the interior of the housing 61.

The indicator unit 70 includes an indicator housing 71 and an indicator 72 inserted into the inner side of the indicator housing 71. A portion of the indicator housing 71 is closely fitted to the rear end of the housing 61 to form the exterior of the pipe connection device 60.

An indicator hole 711a through which the indicator 72 passes may be formed on the inner side of the indicator housing 71.

The following describes in more detail the multiple components housed inside the housing 61 with reference to the drawings.

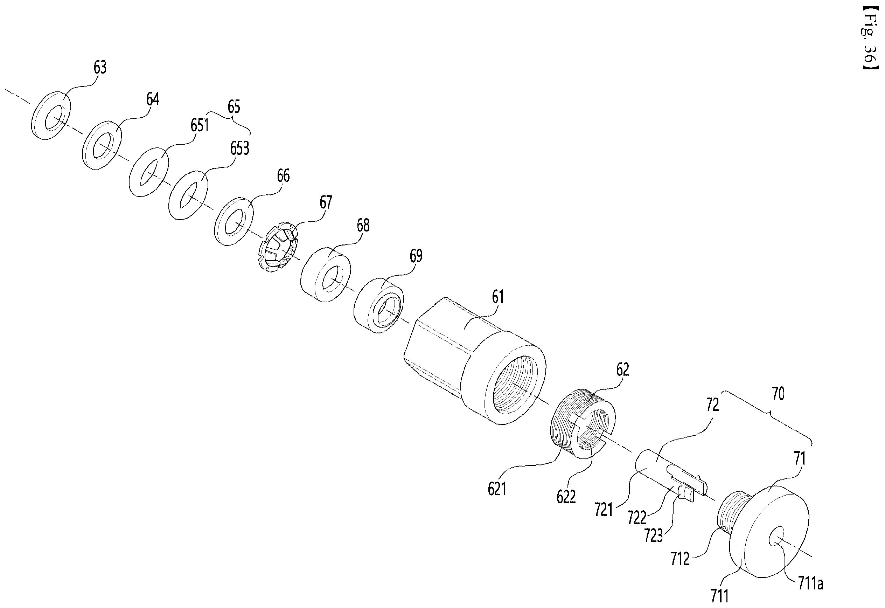

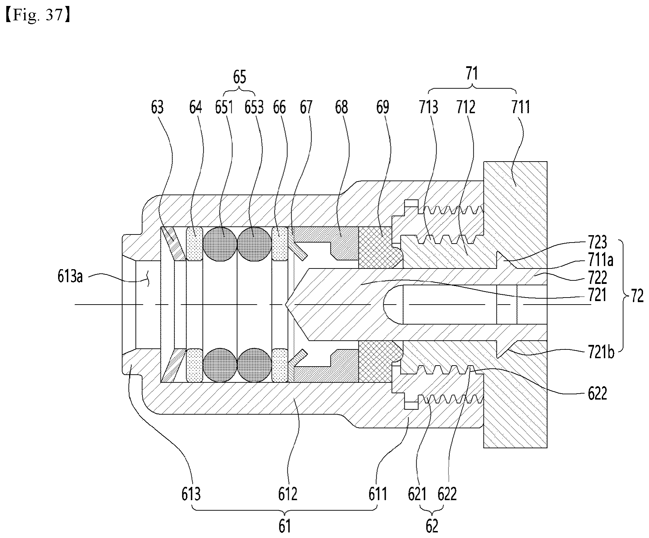

Figure 36 is an exploded perspective view of the pipe connection device according to the third embodiment, and Figure 37 is a cross-sectional view of the pipe connection device cut along 37-37 in Figure 34.

Referring to Figures 36 and 37, the multiple components housed within the housing 61 include a housing nut 62 coupled to the inner surface of the rear end of the housing 61.

In detail, the housing 61 and the housing nut 62 may be formed of the copper material, and the refrigerant pipe 50 may be formed of copper or aluminum.

The housing 61 may include a first housing body 611, a second housing body 612 extending from the front end of the first housing body 611, and a pipe insertion portion 613 extending from the front end of the second housing body 612.

The outer diameter of the first housing body 611 is larger than the outer diameter of the second housing body 612, and the outer diameter of the second housing body 612 is designed to be larger than the outer diameter of the pipe insertion portion 613. Furthermore, the inner diameter of the first housing body 611 may be larger than the inner diameter of the second housing body 612, and the inner diameter of the second housing body 612 may be designed to be larger than the inner diameter of the pipe insertion portion 613.

The housing nut 62 may be formed in a hollow cylindrical shape. The housing nut 62 is formed to have an outer diameter corresponding to the inner diameter of the first housing body 611, enabling it to be coupled to the inner side of the first housing body 611.

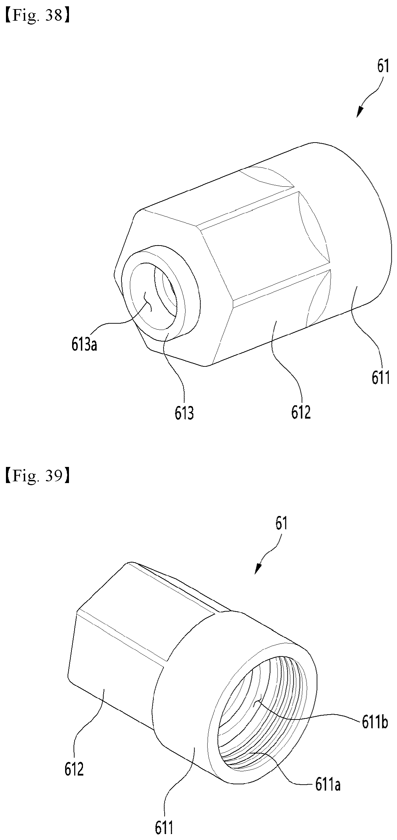

The outer surface of the housing nut 62 may have male threads 621 formed thereon, enabling it to be coupled to the female threads 111b (See Figure 39) of the first housing body 611.

The inner surface of the housing nut 62 may have female threads 622 formed thereon. The inner side of the housing nut 62 can be connected to the nipple 43 of the service valve 40. In addition, the inner side of the housing nut 62 can be connected to the indicator unit 70 described below.

Meanwhile, the indicator housing 71 constituting the indicator 70 may include a cover portion 711 and a receiving portion 712 extending forward from the cover portion 711.

The cover portion 711 may be formed in a disc shape. The cover portion 711 may be fitted to the end of the first housing body 611.

The receiving portion 712 may protrude forward from the front of the cover portion 711 with an outer diameter smaller than the outer diameter of the cover portion 711. An indicator hole 711a may be formed in the inner side of the receiving portion 712. The indicator hole 711a may be formed so as to penetrate from the front surface of the receiving portion 712 to the rear surface of the cover portion 711. The indicator hole 711a may be positioned at the center of the inner side of the receiving portion 712.

A catching groove 711b into which a portion of the indicator 72 is inserted may be formed in the inner surface of the indicator hole 711a.

The catching groove 711b may be recessed radially outward from the inner surface of the receiving portion 712. The catching groove 711b may be tapered so that its cross-sectional area decreases from the front to the rear. When a portion of the indicator 72 is inserted into the catching groove 711b, the indicator 72 can be fixedly mounted to the indicator housing 71.

The indicator housing 71 may further include male threads 713 coupled to the female threads 622 of the housing nut 62. The male threads 713 may be formed on the outer surface of the receiving portion 712. The male threads 713 may be formed along the entire outer surface of the receiving portion 712. Therefore, the receiving portion 712 can be completely secured to the inner side of the first housing body 611.

The indicator 72 may include an indicator body 721 and an extension rib 722 extending rearward from the indicator body 721. The indicator 72 may further include a catching rib 723 protruding from the outer surface of the extension rib 722.

The indicator body 721 may be formed in a cylindrical shape, and the front may be formed in a tapered conical shape.

The extension rib 722 may be formed by extending a portion of the rear of the indicator body 721 rearward. The extension rib 722 may be formed in a plurality. For example, the extension rib 722 may include a pair of ribs extending axially for a predetermined length from positions facing each other at a radial distance.

The extension rib 722 may be inserted into the indicator hole 711a of the receiving portion 712. When the extended rib 722 is inserted into the indicator hole 711a, the catching rib 723 can be fitted into the catching groove 711b of the receiving portion 712. The catching rib 723 may be tapered so that its cross-sectional area decreases from the front to the rear.

In a state where the catching rib 723 is engaged in the catching groove 711b, when a pressure is applied to the front of the indicator 72, the catching rib 723 slides backward and is separated from the catching groove 711b.

In a state where the indicator unit 70 is coupled to the inner side of the first housing body 611, if the refrigerant pipe 50 is inserted into the interior from the front end of the second housing body 612, the refrigerant pipe 50 presses against the front of the indicator body 721, causing the extension rib 722 to protrude (or detach) from the exterior of the indicator housing 71.

By utilizing the phenomenon of the extension rib 722 protruding (or detaching), it is possible to determine whether the refrigerant pipe 50 is accurately inserted into the inner side of the housing 61.

The pipe connection device 60 may further include a tapered washer 63 disposed on the inner side of the housing 61. The tapered washer 63 may be formed of an elastically deformable material. For example, the tapered washer 63 may be formed of a plastic material.

The tapered washer 63 is formed in a ring shape and can be fitted into the inner surface of the housing 61. The tapered washer 63 can be positioned at the front end of the inner side of the housing 61. The front surface of the tapered washer 63 may come into contact with the inner front surface of the second housing body 612. The tapered washer 63 may be formed to be tapered in such a manner that the outer diameter decreases from the front to the rear.

Specifically, the tapered washer 63 may be formed such that its outer diameter decreases in the direction that the refrigerant pipe 50 is inserted into the housing 61.

For example, since the refrigerant pipe 50 is inserted into the inner side of the housing 61 in a direction from the front to the rear, the tapered washer 63 may be formed such that its outer diameter decreases from the front to the rear.

The tapered washer 63 functions to hold the refrigerant pipe 50 in place inside the housing 61. The tapered washer 63 is coupled to the outer surface of the refrigerant pipe 50 to prevent the refrigerant pipe 50 from being removed from the housing 61.

The pipe connection device 60 may further include a first washer 64 disposed on the inner side of the housing 61. The first washer 64 may be formed of an elastically deformable material. For example, the first washer 64 may be formed of plastic or metal.

The first washer 64 is formed in a ring shape and can be fitted into the inner surface of the housing 61. The first washer 64 can be positioned behind the tapered washer 63. The first washer 64 can come into contact with the tapered washer 63.

The first washer 64 functions to hold the refrigerant pipe 50 in place at the inside of the housing 61. The first washer 64 is coupled to the outer surface of the refrigerant pipe 50 to prevent the refrigerant pipe 50 from being removed from the housing 61.

The pipe connection device 60 may further include an O-ring 150 disposed on the inner side of the housing 61. The O-ring 65 may be fitted to the inner surface of the housing 61. The O-ring 65 may be positioned behind the first washer 64. The above O-ring 65 may be formed of an elastically deformable material. For example, the O-ring 65 may be formed of rubber or silicone material.

The O-ring 65 may include a plurality of O-rings 151 and 153. The plurality of O-rings 151 and 153 may include a first O-ring 151 and a second O-ring 153.

The first O-ring 151 and the second O-ring 153 may be formed in the same shape. The first O-ring 151 and the second O-ring 153 may be arranged in parallel in the axial direction. The first O-ring 151 may be positioned behind the first washer 64, and the second O-ring 153 may be positioned behind the first O-ring 151. The first O-ring 151 and the second O-ring 153 may come into contact with each other.

The O-ring 65 functions to hold the refrigerant pipe 50 in place at the inside of the housing 61. The O-ring 65 is coupled to the outer surface of the refrigerant pipe 50 to prevent the refrigerant pipe 50 from being removed from the housing 61. Additionally, the O-ring 65 functions to seal the space between the inner surface of the housing 61 and the outer surface of the refrigerant pipe 50.

The pipe connection device 60 may further include a second washer 66 disposed on the inner side of the housing 61. The second washer 66 may be formed of plastic or metal. For example, the second washer 66 may be formed of stainless steel.

The second washer 66 is formed in a ring shape and can be fitted into the inner surface of the housing 61. The second washer 66 can be positioned behind the O-ring 65. The second washer 66 can come into contact with the O-ring 65.

The second washer 66 functions to hold the refrigerant pipe 50 in place at the inside of the housing 61. The second washer 66 is coupled to the outer surface of the refrigerant pipe 50 to prevent the refrigerant pipe 50 from being removed from the housing 61.

Meanwhile, the housing 61 further includes a grip ring 67, a first packing 68, and a second packing 69.

Below, the specific structure of the housing 61 is described in detail with reference to the drawings, along with the grip ring 67, first packing 68, and second packing 69.

Figure 38 is a front perspective view of the housing according to the third embodiment, and Figure 39 is a rear perspective view of the housing.

Referring to Figures 38 and 39, the housing 61 is composed of a first housing body 611, a second housing body 612, and a pipe insertion portion 613, as described above. Furthermore, an internal space 611a is formed inside the first housing body 611, and female threads 611b is formed on the inner surface, with the male threads 621 of the housing nut 62 engaging with the female threads 611b.

The second housing body 612 may be formed as a hollow cylindrical shape. Alternatively, the second housing body 612 may have an internal space formed as a cylinder, while the outer surface is formed as a polygonal shape. For example, the outer appearance of the second housing body 612 may be formed as a hexagonal column shape.

The outer diameter of the second housing body 612 may be formed smaller than the outer diameter of the first housing body 611. The inner diameter of the second housing body 612 may be formed smaller than the inner diameter of the first housing body 611. The axial length of the second housing body 612 may be longer than the axial length of the first housing body 611.

The interior of the second housing body 612 is connected to the interior of the first housing body 611. A plurality of parts for fixing the refrigerant pipe 50 may be arranged at the internal space of the second housing body 612.

The pipe insertion portion 613 may be formed to protrude forward from the front center of the second housing body 612. The pipe insertion portion 613 may be formed as a hollow cylindrical shape. An inside of the pipe insertion portion 613 may have a pipe insertion opening 613a into which the refrigerant pipe 50 is inserted.

The outer diameter of the pipe insertion portion 613 may be formed smaller than the outer diameter of the second housing body 612. The inner diameter of the pipe insertion portion 613 may be formed smaller than the inner diameter of the second housing body 612. Therefore, due to the difference in inner diameters between the pipe insertion portion 613 and the second housing body 612, components located inside the second housing body 612 can be prevented from escaping to the outside through the pipe insertion portion 613.

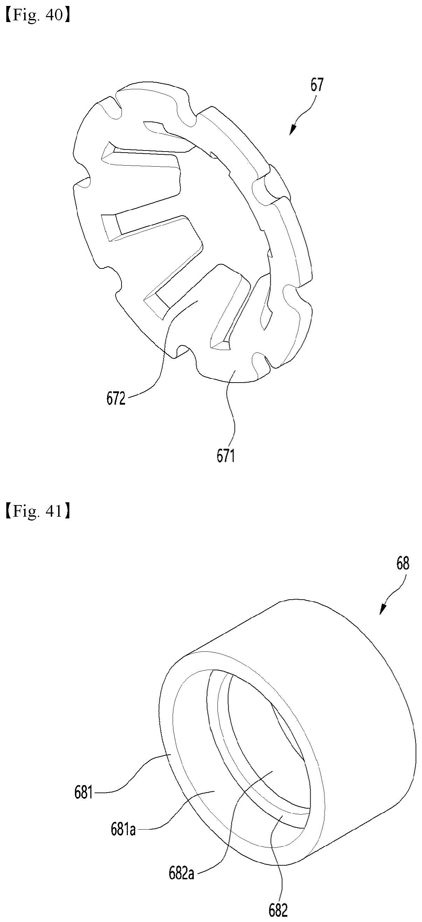

Figure 40 is a front perspective view of the grip ring according to the third embodiment.

Referring to Figure 40, the pipe connection device 60 may further include a grip ring 170 disposed on the inner side of the housing 61.

The grip ring 67 may be fitted into the inner surface of the housing 61. The grip ring 67 may be positioned behind the second washer 66. The grip ring 67 may come into contact with the second washer 66.

The grip ring 67 may include a ring-shaped grip flange 671 and a grip tooth 672 that is bent at a predetermined angle from the grip flange 671 and extends toward the center of the grip flange 671.

The grip tooth 672 may be provided in plurality along the inner surface of the grip flange 671. The grip tooth 672 may be formed extending from the inner surface of the grip flange 671 toward the center of the refrigerant pipe 50. The grip tooth 672 is inclined at an angle in the direction in which the refrigerant pipe 50 is connected, i.e., in the direction in which the refrigerant pipe 50 is inserted when connecting the refrigerant pipe 50 to the housing 61, so that the refrigerant pipe 50 can be pressurized to a predetermined pressure. As a result, the refrigerant pipe 50 can be prevented from detaching from the housing 61.

To efficiently prevent the refrigerant pipe 50 from detaching, the grip ring 67 can be formed from a metal material with high strength and corrosion resistance. For example, the grip ring 67 may be formed from stainless steel material.

The first washer 64 is disposed between the tapered washer 63 and the first O-ring 151, thereby preventing damage to the first O-ring 151. Additionally, the first washer 64 prevents the first O-ring 151 from being excessively deformed during the process of elastic deformation due to pressure.

The second washer 66 is positioned between the second O-ring 153 and the grip ring 67, thereby preventing the second O-ring 153 from being damaged by the grip ring 67. Additionally, it prevents the second O-ring 153 from being excessively deformed during the process of elastic deformation due to pressure.

Figure 41 is a front perspective view of the first packing according to the third embodiment.

Referring to Figure 41, the pipe connection device 60 may further include a first packing 68 disposed on the inner side of the housing 61. The first packing 68 may be formed of an elastically deformable material. For example, the first packing 68 may be formed of a plastic material.

The first packing 68 is formed in a hollow cylindrical shape and can be fitted into the inner surface of the housing 61. The first packing 68 can be positioned behind the grip ring 67. The first packing 68 can come into contact with the grip ring 67.

The first packing 68 may have a stepped inner surface.

The first packing 68 may include a packing body 681.

The packing body 681 may be formed ins a hollow cylindrical shape. The packing body 681 may include a first inner surface 681a.

The first packing 68 may further include a packing shoulder 682 protruding toward the center from the first inner surface 681a of the packing body 681.

The packing shoulder 682 may be formed in a circular shape along the first inner surface 681a of the packing body 681. The packing shoulder 682 may be formed on the inner rear side of the packing body 681. The packing shoulder 682 may be formed extending forward from the inner rear end of the packing body 681.

By the structure of the packing shoulder 682, a second inner surface 682a smaller than the diameter of the first inner surface 681a may be formed on the inner side of the first packing 68.

The front surface of the packing body 681 may come into contact with the rear surface of the grip flange 671 of the grip ring 67. However, the packing body 681 is arranged so as to be spaced apart from the grip tooth 672, thereby preventing the first packing 68 from being damaged by the grip tooth 672.

The packing shoulder 682 functions to hold the refrigerant pipe 50 in place at the inner side of the housing 61. The packing shoulder 682 is coupled to the outer surface of the refrigerant pipe 50 to prevent the refrigerant pipe 50 from being removed from the housing 61. Additionally, the packing shoulder 682 can seal the space between the inner surface of the housing 61 and the outer surface of the refrigerant pipe 50.

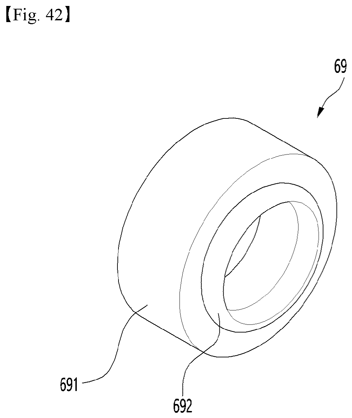

Figure 42 is a rear perspective view of the second packing according to the third embodiment.

Referring to Figure 42, the pipe connection device 60 may further include a second packing 69 disposed on the inner side of the housing 61. The second packing 69 may be formed of an elastically deformable material. For example, the second packing 69 may be formed of a plastic material.

The second packing 69 is formed in a hollow cylindrical shape and can be fitted into the inner surface of the housing 61. The second packing 69 can be positioned behind the first packing 68. The second packing 69 can come into contact with the first packing 68.

The second packing 69 may include a packing body 691.

The packing body 691 may be formed as a hollow cylindrical shape. The refrigerant pipe 50 may be inserted into the inner side of the packing body 691. The packing body 691 holds the refrigerant pipe 50 in place at the inside of the housing 61. The packing body 691 is attached to the outer surface of the refrigerant pipe 50 to prevent the refrigerant pipe 50 from being removed from the housing 61. In addition, the packing body 691 can seal the space between the inner surface of the housing 61 and the outer surface of the refrigerant pipe 50.

The second packing 69 may further include a sealing portion 692 extending axially from the packing body 691.

The sealing portion 692 may extend rearward from the rear surface of the packing body 691. The sealing portion 692 may be formed by extending rearward along the inner edge of the rear surface of the packing body 691. The sealing portion 692 may be circular in shape.

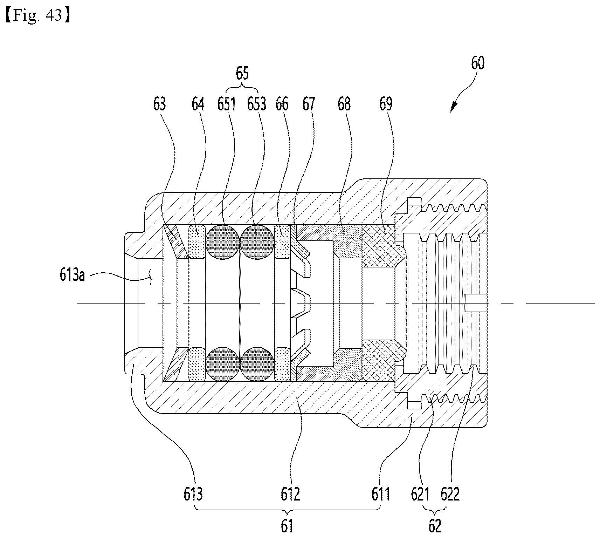

Figure 43 is a cross-sectional view of a pipe connection device with the indicator unit removed according to the third embodiment.

Referring to Figure 43, the inner diameter of the first housing body 611 is formed larger than the inner diameter of the second housing body 612. Therefore, multiple components can be accommodated in side of the second housing body 612 through the inner side of the first housing body 611.

When multiple components are accommodated inside the second housing body 612, the difference in inner diameters between the pipe insertion portion 613 and the second housing body 612 prevents the components (in the second housing body 612) from shifting into the inner space of the pipe insertion portion 613.

After the tapered washer 63, the first washer 64, the first O-ring 151, the second O-ring 153, the second washer 66, the grip ring 67, the first packing 68, and the second packing 69 are sequentially inserted inside the second housing body 612, the housing nut 62 can be coupled to the first housing body 611.

When the housing nut 62 is coupled to the first housing body 611, the inner diameter of the housing nut 62 is smaller than the outer diameters of the aforementioned multiple components, thereby preventing the multiple components from spilling out from the inner side of the second housing body 612.

The following describes a method for connecting a valve and a pipe using the pipe connection device according to an embodiment of the present invention.

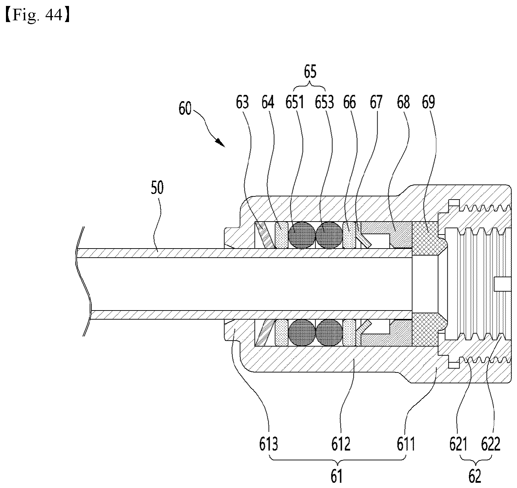

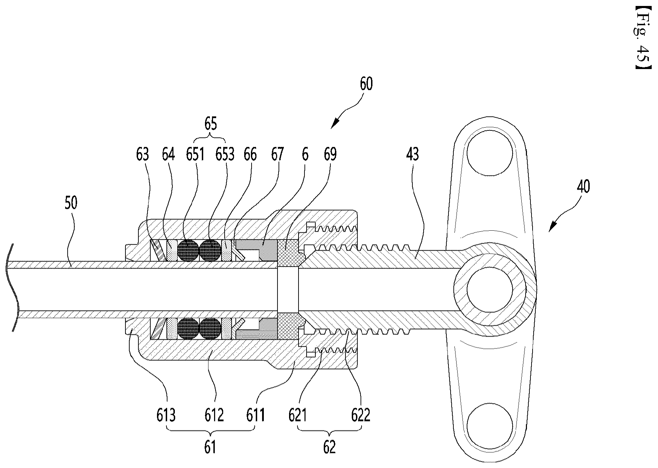

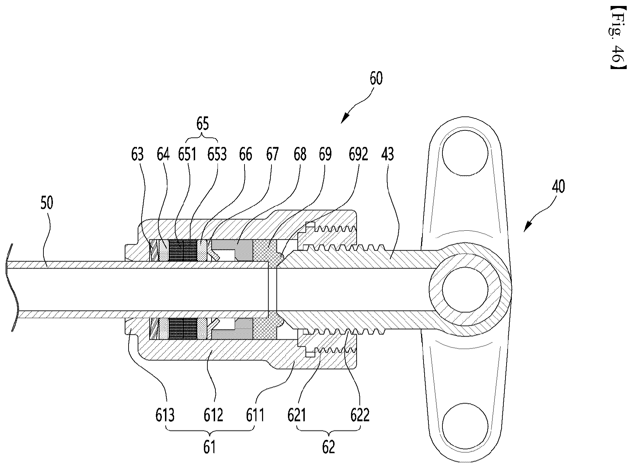

Figure 44 is a cross-sectional view showing the pipe inserted into the pipe connection device of Figure 37, Figure 45 is a cross-sectional view showing the valve nipple inserted into the pipe connection device of Figure 44, and Figure 46 is a cross-sectional view showing the valve nipple fully inserted and secured into the pipe connection device of Figure 45.

Referring to Figures 37 and 44, in a state where the indicator unit 70 is coupled to the pipe connection device 60, the refrigerant pipe 50 is inserted into the housing 61 of the pipe connection device 60.

Specifically, with the indicator unit 70 inserted into the inner side of the first housing body 611, the refrigerant pipe 50 can be inserted into the inner side of the second housing body 612. The refrigerant pipe 50 can be inserted into the inner side of the first housing body 611 through the pipe insertion portion 613.

During the process of inserting the refrigerant pipe 50 into the inner side of the first housing body 611, the tapered washer 63, the first washer 64, the first O-ring 151, the second O-ring 153, the second washer 66, the grip ring 67, and the first packing 68 can be tightly coupled to the outer surface of the refrigerant pipe 50.

Additionally, during the process of inserting the refrigerant pipe 50 into the inner side of the first housing body 611, the end of the refrigerant pipe 50 may press against the front surface of the indicator 72. When the refrigerant pipe 50 presses against the indicator 72, the indicator 72 may be pushed backward and protrude or detach from the indicator housing 71.

The refrigerant pipe 50 can be inserted into the inner side of the first housing body 611 until it contacts the front surface of the second packing 69. Even if the refrigerant pipe 50 presses against the second packing 69, the second packing 69 is supported by the housing nut 62, so the second packing 69 is not pushed backward. This configuration allows the insertion depth (or length) of the refrigerant pipe 50 to be limited, thereby preventing problems such as the pipe being inserted too far or not sufficiently inserted.

Once the refrigerant pipe 50 is fully inserted, the operator loosens the screw coupling of the indicator housing 71 to separate the indicator unit 70 from the housing 61.

Referring to Figures 45 and 46, with the refrigerant pipe 50 connected to the pipe connection device 60, the operator inserts the service valve 40 into the housing 61 of the pipe connection device 60.

Specifically, with the refrigerant pipe 50 inserted into the inner side of the second housing body 612, the nipple 43 of the service valve 40 can be fastened to the inner side of the first housing body 611. The nipple 43 can be screwed into the inner side of the first housing body 611 through the housing nut 62.

During the process of fastening the nipple 43 to the inner side of the first housing body 611, the end of the nipple 43 can press against the sealing portion 692 of the second packing 69. When the nipple 43 presses the second packing 69, the second packing 69 is pushed forward, thereby pressing the first packing 68.

By the pressure applied by the second packing 69, the first packing 68, the grip ring 67, the second washer 66, the second O-ring 153, the first O-ring 151, the first washer 64, and the tapered washer 63 can sequentially be pressed forward.

At this time, the tapered washer 63 can be elastically deformed so that its front surface contacts the inner side of the second housing body 612 while being pressed forward by the pressure. Therefore, the tapered washer 63 can be pressed more strongly against the outer surface of the refrigerant pipe 50.

The first O-ring 151 and the second O-ring 153 can be pressed forward by the pressure and elastically deformed. Therefore, the first O-ring 151 and the second O-ring 153 can be pressed against the outer surface of the refrigerant pipe 50 with even stronger pressure.

At this time, the first O-ring 151 and the second O-ring 153 are protected between the first washer 64 and the second washer 66, during elastic deformation of the first O-ring 151 and the second O-ring 153, a portion of the O-rings can be prevented from being damaged by the grip ring 67.

The second packing 69 can be elastically deformed by being pressed forward by the pressure. While the sealing portion 692 of the second packing 69 is pressed by the nipple 43, a portion of the sealing portion 692 may be elastically deformed into the second packing 69. When a portion of the sealing portion 692 elastically is deformed inward toward the second packing 69, the deformed portion of the sealing portion 692 can be sandwiched between the refrigerant pipe 50 and the nipple 43. That is, the deformed portion of the sealing portion 692 can seal the space between the refrigerant pipe 50 and the nipple 43.

The nipple 43 is fully tightened against the inner side of the housing nut 62 to complete the assembly.

The features of the pipe connection device according to the third embodiment are summarized as follows.

The pipe connection device according to the embodiment of the present invention may include a housing into which a portion of the pipe is inserted on one side. The pipe connector may further include a plurality of components arranged on the inner surface of the housing.

The plurality of components may include a tapered washer that is in close contact with the outer surface of the pipe.

The plurality of components may further include an O-ring that is in close contact with the outer surface of the pipe.

The plurality of components may further include a grip ring that is in close contact with the outer surface of the pipe.

The plurality of components may further include a first washer positioned between the tapered washer and the O-ring.

The plurality of components may further include a second washer disposed between the O-ring and the grip ring.

The housing may include a first housing body to which the valve is coupled. The housing is connected to the first housing body and may further include a second housing body for accommodating the plurality of components.

The inner side of the first housing body may be connected to a housing nut to which the valve is fastened.

The inner diameter of the second housing body may be formed to be smaller than the inner diameter of the first housing body.

The housing may further include a pipe insertion portion extending from the second housing body and having an inner diameter smaller than the inner diameter of the second housing body.

The plurality of components may further include a first packing that is in close contact with the outer surface of the pipe and supports the grip ring.

The first packing may include a packing body that is in close contact with the grip ring. The first packing may further include a packing shoulder that protrudes toward the center from the inner surface of the packing body and is close contact with the outer surface of the pipe.

The plurality of components may further include a second packing that is disposed between the housing nut and the first packing and supports the end of the pipe.

The inner diameter of the second packing may be formed to be smaller than the outer diameter of the pipe.

The outer diameter of the second packing may be formed to be larger than the inner diameter of the housing nut.

When the valve is fastened to the housing nut, the valve may pressurize the second packing to elastically deform the second packing.

When the second packing is elastically deformed, a portion of the second packing may be inserted between the pipe and the valve.

The second packing may include a packing body that is in close contact with the first packing. The second packing may further include a sealing portion that protrudes along the inner edge of the packing body to contact the valve.

The air conditioner may further include an indicator unit that is coupled to the housing nut to limit the insertion depth of the pipe.

The indicator unit may include an indicator housing that is connected to the housing nut. The indicator unit may further include an indicator that is inserted into the inside of the indicator housing.

An indicator hole through which the indicator passes may be formed inside of the indicator housing.

A catching groove may be recessed in the radially outer direction on the inner surface of the indicator housing, so that a portion of the indicator is caught in the catching groove.

The indicator may include an indicator body. The indicator may further include an extension rib that extends from the indicator body and is inserted into the indicator hole. The indicator may further include a catching rib that extends radially from the extension rib and is engaged in the catching groove.

The tapered washer may be formed such that its diameter decreases in the direction in which the pipe is inserted into the housing.

An air conditioner according to one aspect may include an outdoor unit and an indoor unit. The air conditioner may further include a pipe extending from either the outdoor unit or the indoor unit. The air conditioner may further include a pipe connector that connects the pipe to a valve of the other one of the outdoor unit and the indoor unit.

The pipe connector may include a housing into which a portion of the pipe is inserted on one side. The pipe connector may further include a plurality of components arranged on the inner surface of the housing.

The plurality of components may include a tapered washer that is in close contact with the outer surface of the pipe.

The plurality of components may further include an O-ring that is in close contact with the outer surface of the pipe.

The plurality of components may further include a grip ring that is in close contact with the outer surface of the pipe.

The plurality of components may further include a first washer disposed between the tapered washer and the O-ring.

The plurality of components may further include a second washer disposed between the O-ring and the grip ring.

## Claims

1. A pipe connection device, comprising:
a housing including:
a front female thread portion formed on an inner surface of one end thereof; and
a rear female thread portion formed on an inner surface of the other end thereof, and having a receiving space formed therein for receiving components;
a housing nut inserted into the one end of the housing, having a pipe hole formed therein through which a refrigerant pipe passes in a forward direction;
a first stopper positioned behind the housing nut in the receiving space to restrict reverse movement of the refrigerant pipe; an outer washer positioned behind the first stopper;
one or more pipe O-rings positioned behind the outer washer;
an inner washer positioned behind the one or more pipe O-rings;
a second stopper positioned behind the inner washer to restrict the reverse movement of the refrigerant pipe; and
a main packing positioned behind the second stopper to support the second stopper.

2. The pipe connection device according to claim 1, wherein the housing nut includes:
a nut body in which the pipe hole is formed; and
a male thread portion formed on an outer surface of the nut body to be coupled to the front female thread portion.

3. The pipe connection device according to claim 2, wherein a pair of jig grooves extends radially from an edge of the pipe hole,
wherein the pair of jig grooves are formed in positions facing each other,
and wherein the pair of jig grooves extend rearwardly from a front of the nut body to a predetermined depth.

4. The pipe connection device according to claim 1, wherein the housing nut is formed of brass material.

5. The pipe connection device according to claim 1, wherein a packing sleeve on which the main packing seated protrudes from an inner surface of the housing,
wherein the packing sleeve is formed at a point spaced apart from a front end of the rear female thread portion towards the front female thread portion, and extends in a circumferential direction of the housing.

6. The pipe connection device according to claim 5, wherein the receiving space is a space formed between a rear end of the front female thread portion and the packing sleeve.

7. The pipe connection device according to claim 5, further comprising a socket O-ring interposed between the packing sleeve and the rear female thread portion,
wherein an O-ring groove in which the socket O-ring is seated is recessed in the inner surface of the housing.

8. The pipe connection device according to claim 1, wherein the first stopper is a tapered ring having:
a pipe hole through which the refrigerant pipe passes;
a front end contacting the housing nut;
a rear end contacting the outer washer, and
a diameter decreasing from the front end to the rear end.

9. The pipe connection device according to claim 1, further comprising a remover coupled to a rear end of the housing,
wherein the remover comprises:
a cap threadedly coupled to the rear female thread portion; and
an indicator inserted into the cap.

10. The pipe connection device according to claim 9, wherein the cap includes:
a cap body; and
a guide sleeve extending from a front of the cap body and having a male thread portion on an outer surface thereof,
wherein the cap includes inside thereof:
a guide hole extending a predetermined length from a front end of the guide sleeve;
a hook extraction hole extending a predetermined length from a rear end of the cap body and having a diameter smaller than that of the guide hole; and
a hook engagement step connecting the guide hole and the hook extraction hole.

11. The pipe connection device according to claim 10, wherein the indicator includes:
a body portion inserted into an inside of the guide sleeve;
a contact leg extending from a front end of the body portion;
a sliding leg extending from a rear of the body portion,
wherein an engagement step on which an end of the refrigerant pipe is hooked protrudes from an outer surface of an end of the contact leg.

12. The pipe connection device according to claim 11, wherein the sliding leg includes a pair of legs having engagement hooks, the engagement hooks respectively protruding from outer surfaces of the pair of legs,
and wherein the engagement hooks contact the hook engagement step.

13. The pipe connection device according to claim 11, wherein the indicator further comprises a balancing leg extending from the front of the body portion,
and wherein the balancing leg is shorter than the contact leg.
